(19) Europäisches Patentamt
European Patent Office
Office européen des brevets

(11) **EP 4 679 285 A1**

(12) **EUROPEAN PATENT APPLICATION**
published in accordance with Art. 153(4) EPC

(43) Date of publication:
**14.01.2026 Bulletin 2026/03**

(21) Application number: **23926307.2**

(22) Date of filing: **08.03.2023**

(51) International Patent Classification (IPC):
***G06F 16/31*** *(2019.01)*

(52) Cooperative Patent Classification (CPC):
**G06F 16/31**

(86) International application number:
**PCT/JP2023/008899**

(87) International publication number:
**WO 2024/185097 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Advanced Accelerating Systems Co.,
Ltd.
Yokohama-shi, Kanagawa, 236-0021 (JP)**

(72) Inventors:
• **MAKINO Junichiro
Yokohama-shi, Kanagawa 236-0021 (JP)**
• **HIMENO Ryutaro
Yokohama-shi, Kanagawa 236-0021 (JP)**

(74) Representative: **Grünecker Patent- und
Rechtsanwälte
PartG mbB
Leopoldstraße 4
80802 München (DE)**

(54) **APPROXIMATE CHARACTER STRING COMPARISON METHOD, AND COMPUTER PROGRAM FOR REALIZING SAID COMPARISON METHOD**

(57) The present invention relates to a method of retrieving an approximate character string in a reference character string based on a query character string. The method includes creating a hierarchical index based on the reference character string; performing mapping of a query character string with respect to the reference character string by referring to the hierarchical index to identify a partial character string in the reference character string that matches at least a part of the query character string; and deriving the approximate character string based on at least one or more of the partial character strings identified by the mapping. The hierarchical index is created by repeating adding and sorting additional keys to respective keys cut out from the reference character string in accordance with the number of times of appearance of the cut-out keys.

FIG. 1

EP 4 679 285 A1

**Description**

Technical Field

The present invention relates to an approximate character string comparison technology, and in particular, the present invention relates to an approximate character string comparison apparatus and an approximate character string comparison method, as well as a computer program for realizing the approximate character string comparison method, that can be used for analyzing a human genome.

Background Art

The human genome is a set of genetic information of a human, and a substance that carries the human genome is deoxyribonucleic acid (DNA) in which about 3 billion pairs of bases are linked. The bases are adenine (A), guanine (G), cytosine (C), and thymine (T). That is, the genetic information of a human is determined by a sequence of these bases.

An apparatus called a sequencer is used for reading the human genome. The sequencer reads a human genome as a sample, amplifies the human genome by shredding the human genome into base pairs having a predetermined upper limit value (about several hundred base pairs), and outputs the results as a huge amount of data sequences consisting of data pieces. The current sequencer can read out the human genome of one person in about 1 hour.

The scattered data pieces read out by the sequencer are reconstructed into the human genome sequence having the original length and then analyzed by being compared with a human genome reference sequence determined as a standard genome sequence of a human. For example, each data piece is subjected to examination (mapping) to determine at which position the data piece is located in the comparison with the human genome reference sequence, and in addition, analysis is carried out to examine, for example, what kind of mutation is present. In general, the data read out from the sequencer includes an error. Therefore, the error is reduced by performing statistical processing by using redundant data, for example, 30 times the data of the human genome sequence of one person per sample. As a result, a huge amount of calculation is required for analyzing the human genome sequence. Therefore, a high-performance computer such as a supercomputer, a cluster computer, or a computer based on field-programmable gate array (FPGA) is used typically.

For the mapping of the data pieces, for example, a program tool such as Burrows-Wheeler Aligner (BWA) is used. The BWA is composed of three algorithms, BWA-backtrack, BWA-SW, and BWA-MEM. Among these, BWA-MEM is widely used as a high-speed algorithm that responds to indel (insertion and deletion). BWA-MEM is an algorithm that creates an index for a portion that repeatedly appears in the human genome reference sequence, by using a suffix sequence among query character strings based on the read-out data pieces, and then carries out mapping (Non-Patent document 1).

In addition, the data piece is compared with a partial sequence of the human genome reference sequence, which is obtained by mapping and then is analyzed to determine what kind of mutation is present. For the comparison between the partial sequence of the human genome reference sequence and the data piece, for example, an alignment algorithm is used. In the alignment algorithm, an approximate character string is identified in accordance with a dynamic programming method, while calculating a degree of mutation (degree of similarity) for each of elements of sequences which are referred to as the alignment table (Non-Patent Document2).

Citation List

Non Patent Literatures

Non-Patent Document 1: Heng Li, "Aligning sequence reads, clone sequences and assembly contigs with BWA-MEM", May 26, 2013, arXiv: 1303.3997 (q-bio.GN)
Non-Patent Document2: Masao Uchiyama et al., "Fast Scanning Method of Suffix Array for Full Text Retrieving by Approximate Character String Comparison", September 15, 2002, Information Processing Society of Japan, Vol. 43 No. SIG 9 (TOD 15)

Summary of Invention

Technical Problem

The BWA-MEM described above is widely used as an algorithm that allows a gap and can carry out high-speed mapping; however, there is such a problem that a large amount of memory resources is required since the size of the index to be created is very large. In the BWA-MEM, access to the memory is required as many times as the number of characters (i.e., the number of bases) of the query character string. Therefore, random access to the memory occurs frequently, and as a result, there is such a problem that the processing speed of the processor is limited by the time for access to the memory.

More specifically, in BWA-MEM, random access to the main memory is executed as many times as the total number of characters in the query character string in order to identify a position where a partial character string (this may be referred to as a "key") in the query character string appears in the human genome reference sequence. This is because the amount of data to be used for analyzing the human genome is very large, and thus the required data sequence cannot be accommodated at once in a cache memory that can access the data at a high speed. Here, a waiting time for one random access to the main memory (a time taken from occurrence of access until data is actually acquired) is about 1 $\mu$s (0.000001 seconds) per bank in the current computer. As a result, in a case of analyzing the human genome of 3 billion base pairs, the total access time T with respect to the total number of characters is

$$T = 3,000,000,000 \times 0.000001 \times 30$$
$$= 90,000 \text{ (seconds)}$$

in a case of setting the redundancy to 30.

That is, in the analysis of the human genome, it takes about 90,000 seconds (about 25 hours) for only the random access to the main memory. Therefore, even in a case where a computer equipped with a high-performance processor is used, there is a limit to shortening the mapping time because the memory access time is constrained.

Further, as described above, it currently takes about 1 hour in order to read out the human genome of one person with a sequencer. On the other hand, in a case where the BWA-MEM is executed using a high-performance computer, the mapping is completed within the reading-out time of the sequencer, and the balance between the two is generally maintained.

On the other hand, the cost reduction of the next-generation sequencer is in progress, and in addition, it is said that the reading-out time can be further shortened. In association with this, it is desired to shorten the analysis time as well. As one approach for shortening the analysis time, further high performance of the computer is considered; however, the cost is very high for the high performance of the computer, and thus the hurdle is high in the practical use.

Furthermore, in the alignment algorithm in the related art, which is used for analyzing the data pieces subjected to mapping, there is such a problem that the amount of calculation is large, and the time required is lengthened because the degree of mutation is calculated for all elements of the alignment table.

Therefore, an object of the present invention is to provide a new technology that is capable of analyzing given query data at a high speed and/or efficiently by using reference data.

More specifically, one object of the present invention is to provide an approximate character string comparison apparatus that can perform an approximate character string comparison between a given query character string and a reference character string at a high speed and/or efficiently and an approximate character string comparison method using the approximate character string comparison apparatus.

Further, another object of the present invention is to provide an approximate character string comparison apparatus that can perform an analysis at a high speed and/or efficiently, where the analysis uses a human genome reference sequence based on a data piece read out by a sequencer, and an approximate character string comparison method using the approximate character string comparison apparatus.

In addition, still another object of the present invention is to provide a technology for creating a hierarchical index based on a reference character string that is suitable for the approximate character string comparison.

Solution to Problem

The present invention for achieving the above-described objects is configured to include the specific matters of the invention and the technical features, which will be shown below.

The present invention in accordance with an aspect is a computer program for causing a computing device to realize a method for retrieving an approximate character string in a reference character string based on a query character string. The method includes creating a hierarchical index based on the reference character string; performing mapping of a query character string with respect to the reference character string by referring to the hierarchical index to identify a partial character string in the reference character string that matches at least a part of the query character string; and deriving, as the approximate character string, a character string that approximates the character string to be subjected to comparison, based on a character string to be subjected to comparison based on the reference character string and a character string for comparison based on the query character string, which are created based on the partial character string identified by the mapping. Here, the creating of the hierarchical index includes cutting out each of first keys having a predetermined length from the reference character string; creating a first key sequence in which a hash value calculated based on the first key by a predetermined hash function is assigned for each of the cut-out first keys; updating the created first key sequence, and outputting the updated first key sequence as the hierarchical index. In addition, the updating of the first key sequence includes identifying the number of times of appearance of the first key in the reference character string for each of the first keys in the first key sequence; and adding a first additional key consisting of at least one or more characters following the first key in the reference character string to the first key in accordance with the number of times of appearance of the identified first key, and then updating the first key sequence.

The creating of the first key sequence may include sorting each of the first keys in the first key sequence in accordance with the hash value.

In addition, the updating of the first key sequence may include determining whether or not the identified number of times of appearance exceeds a predetermined allowable value; creating a new first key by adding the first additional key consisting of at least one or more characters following the first key in the reference character string to the first key in a case where the identified number of times of appearance is determined to exceed the predetermined allowable value; and identifying the number of times of appearance of the new first key in the reference character string for the new first key.

In addition, the updating of the first key sequence further may include sorting the new first keys in the first key sequence in accordance with the first additional key.

In addition, the updating of the first key sequence may include creating a new first key by sequentially adding a new first additional key to the current first key until the identified number of times of appearance is determined not to exceed the predetermined allowable value.

In addition, the outputting of the first key sequence as the hierarchical index may include outputting the current first key sequence as the hierarchical index in a case where the identified number of times of appearance is determined not to exceed the predetermined allowable value.

The performing of the mapping may include cutting out each of the second keys having a predetermined length from the query character string; creating a second key sequence in which a hash value calculated based on the second key by the predetermined hash function is assigned for each of the second keys cut out from the query character string; and identifying a start position of appearance of the second key and the number of times of appearance of the second key in accordance with the hash value by referring to the hierarchical index for each of the second keys at a predetermined sampling interval.

The identifying of the start position of appearance of the second key and the number of times of appearance of the second key may include determining whether or not the number of times of appearance of the second keys exceeds the predetermined allowable value; creating a new second key by adding the second additional key consisting of at least one or more characters following the second key in the query character string to the second key in a case where the number of times of appearance of the second key is determined to exceed the predetermined allowable value; and outputting the identified current second key as the matched character string and outputting the start position of appearance of the second key in a case where the number of times of appearance of the second key is determined not exceed the predetermined allowable value.

In addition, the identifying of the start position of appearance of the second key and the number of times of appearance of the second key may further include creating the new second key by sequentially adding a new second additional key to the current second key until the identified number of times of appearance of the second key does is determined not to exceed the predetermined allowable value.

In addition, in a case where the number of times of appearance of the second key is determined to exceed the predetermined allowable value, the predetermined sampling interval of the second key may be changed to be increased.

The deriving for the approximate character string may include receiving a character string pair consisting of the character string to be subjected to comparison and the character string for comparison, which is based on the partial character string identified by the mapping; executing predetermined alignment processing to derive at least one approximate character string based on the character string pair; and outputting the derived at least one approximate character string.

The executing of the predetermined alignment processing may include creating a predetermined alignment table based on the character string to be subjected to comparison and the character string for comparison; setting a calculation region having a width m where elements on a diagonal line in the alignment table are centered; calculating a degree of mutation for each element in the set calculation region; and determining a maximum degree of mutation based on the calculated degree of mutation; and deriving the at least one approximate character string based on the determined maximum degree of mutation.

In addition, the executing of the predetermined alignment processing may include comparing the maximum degree of mutation with a predetermined lower limit value to determine whether the maximum degree of mutation exceeds the predetermined lower limit value; widening (expanding) the width m of the calculation region to set a new calculation region in a case where the maximum degree of mutation is determined not to exceed the predetermined lower limit value; and deriving the at least one approximate character string based on an element having the maximum degree of mutation in a case where the maximum degree of mutation is determined to exceed the predetermined lower limit value. In addition, the method may be configured such that setting a new calculation region by expanding the calculation region and calculating the degree of mutation are repeated until the maximum degree of mutation is determined to exceed the lower limit value.

The predetermined lower limit value may be a value of a degree of mutation in a case where it is assumed that there are m consecutive gaps in a predetermined element array and the other portions are matched completely or substantially.

In addition, the method may further include creating the character string to be subjected to comparison by adding a corresponding predetermined character string in the reference character string to the partial character string; and creating the character string for comparison by adding a corresponding predetermined character string in the query character string to the partial character string.

In addition, the present invention in accordance with another aspect is a computer program for causing a computing device to execute a method of creating a hierarchical index for performing a search in a reference character string based on a query character string.

The method includes cutting out each of first keys having a predetermined length from the reference character string; creating a first key sequence in which a hash value calculated based on the first key by a predetermined hash function is assigned for each of the cut-out first keys; updating the created first key sequence; and outputting the updated first key sequence as the hierarchical index.

Here, the updating of the first key sequence includes identifying a start position of appearance of the first key and the number of times of appearance of the first key in the reference character string for each of the first keys in the first key sequence; and adding a first additional key consisting of at least one or more characters following the first key in the reference character string to the first key in accordance with the identified start position of appearance of the first key and the identified number of times of appearance of the first key, and then updating the first key sequence.

In addition, the present invention in accordance with a still another aspect is a computer program for causing a computing device to execute a method of performing mapping of a query character string with respect to a reference character string. The method includes reading a hierarchical index consisting of a first key sequence in which a hash value calculated based on the first key by a predetermined hash function is assigned for each of first keys cut out from the reference character string and for each of the first keys, where the first key sequence is such that an additional key is added to the first key in accordance with a start position of appearance of the first key and the number of times of appearance of the first key in the reference character string; cutting out each of the second keys having a predetermined key length from the query character string; creating a second key sequence in which a hash value calculated based on the second key by a predetermined hash function is assigned for each of the second keys cut out from the query character string; identifying a start position of appearance of the second key and the number of times of appearance of the second key by referring to the hierarchical index for each of the second keys at a predetermined sampling interval in accordance with the hash value and comparing the second key with the first key in the first key sequence; determining whether or not the identified number of times of appearance exceeds a predetermined threshold value; creating a new second key by adding an additional key consisting of at least one or more characters following the second key in the query character string to the second key in a case where the identified number of times of appearance is determined to exceeds a predetermined allowable value; and outputting the identified start position of appearance of the current second key and the key in a case where the identified number of times of appearance is determined not to exceed the predetermined threshold value. In addition, the identifying of the start position of appearance of the second key and the number of times of appearance of the second key includes creating the new second key by sequentially adding the new additional key to the current second key until the identified number of times of appearance is determined not to exceed the predetermined threshold value.

Here, in a case where the identified number of times of appearance is determined to exceed the predetermined allowable value, the predetermined sampling interval of the second key may be changed to be increased.

In addition, the present invention in accordance with an even still another aspect is a computer program for causing a computing device to realize a method of identifying a mutation between a partial character string in a reference character string and a query character string by predetermined alignment processing. The method includes receiving a character string pair consisting of a character string to be subjected to comparison based on the reference character string and a character string for comparison based on the query character string, which are created based on the partial character string identified by mapping; executing predetermined alignment processing to derive, as at least one approximate character string, a character string that approximates the character string to be subjected to comparison based on the character string pair; and outputting the derived at least one approximate character string. In addition, the executing of the predetermined alignment processing includes creating a predetermined alignment table based on the character string to be subjected to comparison and the character string for comparison; setting a calculation region having a width m where elements on a diagonal line in the alignment table are centered; calculating a degree of mutation for each element in the set calculation region; determining a maximum degree of mutation based on the calculated degree of mutation; and deriving the at least one approximate character string based on the determined maximum degree of mutation.

In addition, the executing of the predetermined alignment processing may include comparing the maximum degree of mutation with a predetermined lower limit value to determine whether the maximum degree of mutation exceeds the predetermined lower limit value; expanding the width m of the calculation region to set a new calculation region in a case where the maximum degree of mutation is determined not to exceed the predetermined lower limit value; and deriving the at least one approximate character string based on an element having the maximum degree of mutation in a case where the maximum degree of mutation is determined to exceed the predetermined lower limit value. In addition, setting a new calculation region by expanding the calculation region and calculating the degree of mutation may be repeated until the maximum degree of mutation is determined to exceed the lower limit value.

In addition, the executing of the predetermined alignment processing may further include setting, as the predetermined lower limit value, a value of a degree of mutation in a case where it is assumed that there are m consecutive gaps in a predetermined element array and the other portions are matched completely or substantially.

It is noted that the present invention is also established as a computer-readable recording medium that non-transitorily records the computer program. In addition, the present invention is also established as a device consisting of hardware and/or firmware configured to execute the method. The approximate character string comparison apparatus is one embodiment of the present invention.

It is noted that in the present specification and the like, the means or unit does not simply mean a physical means, and also includes a case where a function provided by the means or unit is realized by software. In addition, the functions provided by one means or unit may be realized by two or more physical means, or the functions of two or more means or units may be realized by one physical means. In addition, the term "system" refers to a logical collection of a plurality of devices (or functional modules that realize a specific function), regardless of whether or not each device or functional module is located within a single housing.

Advantageous Effects of Invention

According to the present invention, it is possible to perform an analysis using reference data for given query data at a high speed and/or efficiently. In particular, according to the present invention, it is possible to perform an approximate character string comparison between a given query character string and a reference character string at a high speed and/or efficiently.

In addition, according to the present invention, it is possible to perform an analysis at a high speed and/or efficiently, where the analysis uses a human genome reference sequence based on a data piece read out by a sequencer.

Further, according to the present invention, it is possible to provide a hierarchical index based on a reference character string that is suitable for the approximate character string comparison.

Other technical features, objects, action effects, and advantages of the present invention will be made clear by the following embodiments described with reference to the accompanying drawings.

The effects described in the present specification are merely examples and are not limiting, and other effects may also be present.

Brief Description of Drawings

FIG. 1 is a block diagram illustrative of an example of a schematic configuration of a computer system according to an embodiment of the present invention.

FIG. 2 is a flowchart for an explanatory description of an example of an outline of approximate character string comparison processing by a computer system according to the embodiment of the present invention.

FIG. 3 is a flowchart for an explanatory description of an example of index creation processing by the computer system according to the embodiment of the present invention.

FIG. 4 is a diagram illustrative of an example of a reference character string that is used in the computer system according to the embodiment of the present invention.

FIG. 4A is a diagram for an explanatory description of an example of a data sequence structure in a process of creating a hierarchical index based on the reference character string illustrated in FIG. 4.

FIG. 4B is a diagram for an explanatory description of an example of a data sequence structure in a process of creating a hierarchical index based on the reference character string illustrated in FIG. 4.

FIG. 4C is a diagram for an explanatory description of an example of a data sequence structure in a process of creating a hierarchical index based on the reference character string illustrated in FIG. 4.

FIG. 5 is a diagram illustrative of an example of a table structure showing a start position of a key and the number of times of appearance of the key in a process of creating a hierarchical index based on the reference character string illustrated in FIG. 4.

FIG. 6 is a diagram illustrative of an example of a reference character string that is used in the computer system according to the embodiment of the present invention.

FIG. 7 is a flowchart for an explanatory description of an example of search processing for a reference character string based on a query character string by the computer system according to the embodiment of the present invention.

FIG. 8A is a diagram illustrative of an example of an alignment table for an explanatory description of a Needleman-Wunsch algorithm.

FIG. 8B is a diagram illustrative of an example of an alignment table for an explanatory description of the Needleman-Wunsch algorithm.

FIG. 8C is a diagram illustrative of an example of an alignment table for an explanatory description of the Needleman-Wunsch algorithm.

FIG. 8D is a diagram illustrative of an example of an alignment table for an explanatory description of the Needleman-Wunsch algorithm.

FIG. 9 is a flowchart for an explanatory description of an example of alignment processing using a dynamic programming method by the computer system according to the embodiment of the present invention.

FIG. 10A is a diagram illustrative of an example of an alignment table for an explanatory description of alignment using a dynamic programming method according to the embodiment of the present invention.

FIG. 10B is a diagram illustrative of an example of an alignment table for an explanatory description of alignment using the dynamic programming method according to the embodiment of the present invention.

FIG. 10C is a diagram illustrative of an example of an alignment table for an explanatory description of alignment using the dynamic programming method according to the embodiment of the present invention.

FIG. 11A is a diagram illustrative of an example of an approximate character string obtained by alignment using the dynamic programming method according to the embodiment of the present invention.

FIG. 11B is a diagram illustrative of an example of an approximate character string obtained by alignment using the dynamic programming method according to the embodiment of the present invention. and

FIG. 12 is a diagram illustrative of an example of a hardware configuration of a computing device in the system according to the embodiment of the present invention.

Description of Embodiments

Embodiments of the present invention will be described below with reference to the drawings. However, the embodiments described below are merely examples, and are not intended to exclude the application of various modifications or technologies not explicitly described below. The present invention may be implemented with various modifications (for example, by combining the embodiments and the like) without departing from the scope of the present invention. In addition, in the following description of the drawings, the same or similar portions are denoted by the same or similar reference numerals. The drawings are schematic and do not necessarily correspond to actual dimensions, ratios, or the like. The drawings may also include parts that differ in dimensional relationships and ratios.

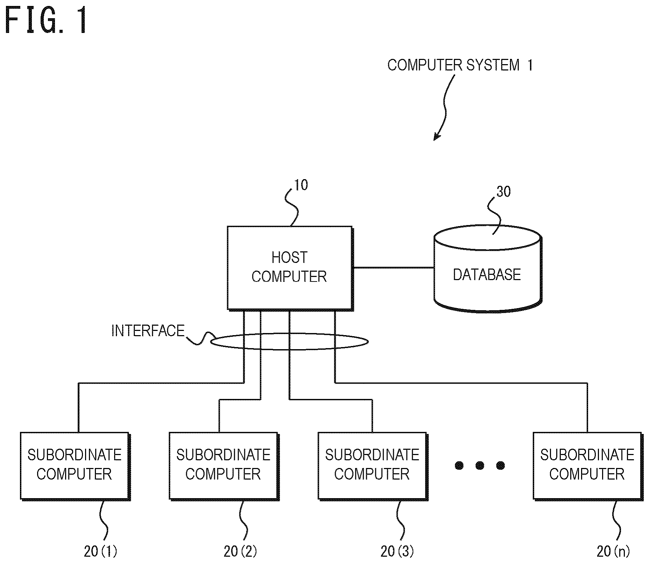

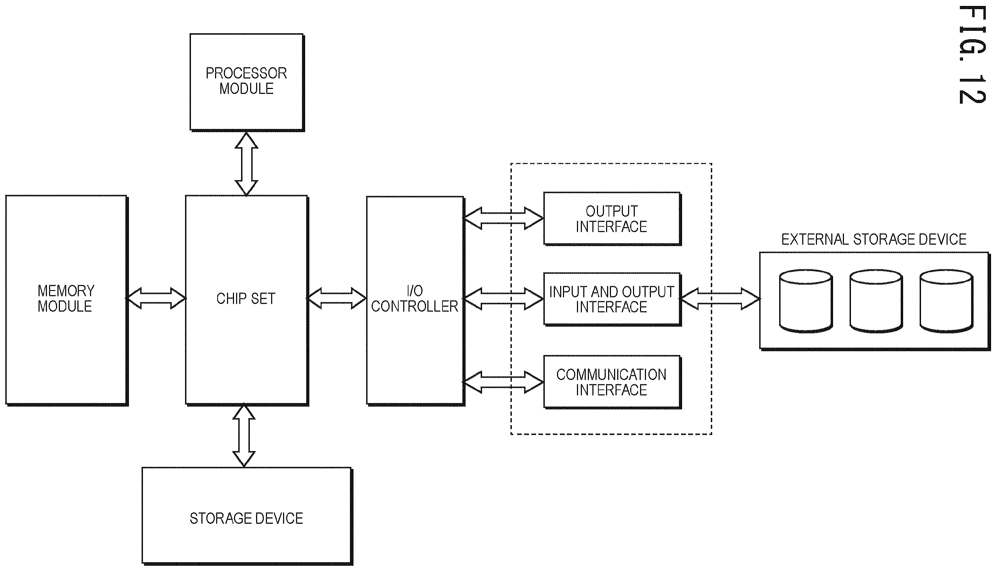

FIG. 1 is a block diagram illustrative of an example of a schematic configuration of a computer system according to an embodiment of the present invention. As illustrated in this figure, a computer system 1 is constituted by including, for example, a host computer 10, a plurality of subordinate computers 20(1) to 20(n), and a database 30. The host computer 10 and the subordinate computers 20(1) to 20(n) are communicably connected to each other through a predetermined interface. In the present disclosure, the computer system 1 is configured as a centralized computer system in which the host computer 10 comprehensively controls the plurality of subordinate computers 20(1) to 20(n), but the computer system 1 is not limited thereto. For example, the computer system 1 may be configured as a distributed computer system. In the distributed computer system, each computer may be operated cooperatively by parallel distributed processing, but for specific processing, only one representative computer may execute the processing. The hardware configurations of the host computer 10 and the subordinate computer 20 are illustrated in FIG. 12, but since they are obvious to those skilled in the art, a detailed description thereof will be omitted. In the present disclosure, the subordinate computer 20 subjects a task to parallel processing under the control of the host computer 10. For example, each of the plurality of subordinate computers 20 carries out the analysis processing in the comparison with the reference character string based on the given individual query character string. In the following description, the subordinate computers 20(1) to 20(n) may be simply denoted as "subordinate computer 20" unless they are required to be distinguished from each other.

The database 30 stores various types of data, for example, a reference character string, under the control of the host computer 10. As an example, the database 30 stores a human genome reference sequence. The human genome reference sequence is data indicating a sequence of base pairs determined as a standard genome sequence of a human. In addition, the database 30 stores an index created based on the reference character string. The index is a certain type of data sequence structure that is used for conducting a search in a reference character string. It is noted that in the drawing, although the database 30 has such a configuration that the database 30 is connected to be accessible only to the host computer 10, the database 30 is not limited thereto, and the subordinate computer 20 may also have such a configuration that the subordinate computer 20 is connected to be accessible thereto.

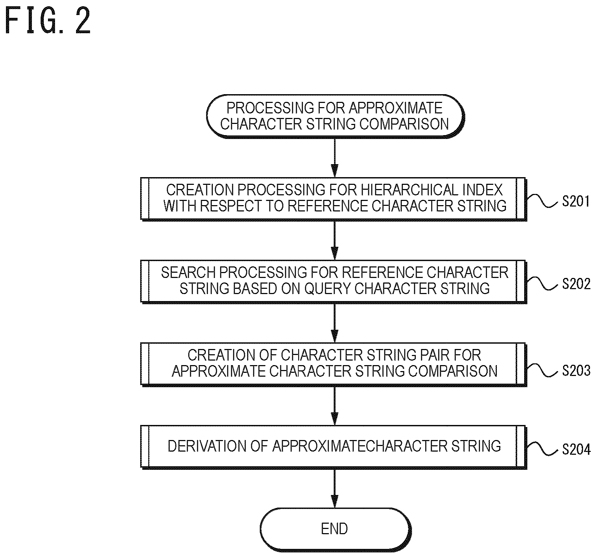

FIG. 2 is a flowchart for an explanatory description of an example of an outline of approximate character string comparison processing by a computer system according to the embodiment of the present invention. Such processing is realized in such a way that for example, the host computer 10 and the plurality of subordinate computers 20 cooperate with other hardware components by executing an approximate character string comparison program under the control of the processor.

As illustrated in this figure, first, the host computer 10 reads out the reference character string stored in the database 30 and creates an index based on the read reference character string (S201). Specifically, the host computer 10 creates an index having a predetermined data sequence structure by expanding and/or sorting a partial character string in the reference character string in accordance with a predetermined condition and making the partial character string into any sequence. The data sequence structure consists of a hierarchical tree structure. In the present disclosure, such an index is referred to as a hierarchical index. The host computer 10 stores the index created based on the reference character string in the database 30. Details of the creation processing for the hierarchical index based on the reference character string will be described later. It is noted that processing S201 may be omitted in a case where the hierarchical index based on the reference character string is already created and stored in the database 30.

Subsequently, the host computer 10 receives a query character string from an external apparatus (not illustrated in the drawing) and carries out mapping by referring to the hierarchical index based on the received query character string (S202). In an example, the external apparatus is a sequencer that reads out a human genome, and the query character string is a data piece of, for example, about 150 to 200 base pairs, which is output from a sequencer. In the present disclosure, the subordinate computer 20 also performs mapping by referring to the hierarchical index based on the assigned query character string under the control of the host computer 10.

The mapping is the processing of identifying a partial character string (matched character string) in the reference character string that matches at least a part of the query character string. That is, the start position of appearance and the length (number of characters) of the partial character string that matches at least a part of the query character string in the reference character string are identified by the mapping. In the mapping according to the present disclosure, each key in the query character string and the start position of appearance thereof in the reference character string are identified by retrieving or searching for the hierarchical index for each key in the query character string. It is noted that, in order to increase the processing speed, the created hierarchical index may be expanded on a high-speed memory such as a main memory or a cache memory.

In addition, in the mapping according to the present disclosure, in a case of searching for the hierarchical index, the sampling interval of the start position of appearance of the key in the query character string is adjusted to be large to a certain extent as compared with the sampling interval in the related art. For example, in an algorithm for performing sequence alignment of a base sequence of DNA or an amino acid sequence of a protein, which is referred to as Basic Local Alignment Search Tool (BLAST), the interval of the start position of appearance of the key is set to 3 to 5 characters; however, it may be set to, for example, 10 characters or more in the search according to the present disclosure. In a case where the sampling interval of the start position of appearance of the key is small in conducting a search, the number of searches increases and the efficiency decreases. On the other hand, in a case where the sampling interval of the start position of appearance of the key is always large, the probability of overleaping increases in exchange for the increase in search speed. Therefore, in the present disclosure, in a case where the length of the key exceeds a certain length while it is increased, the sampling interval of the start position of appearance is increased to prevent the overleaping of the match of the key and to improve the search efficiency.

It is noted that, in the above example, although each of the host computer 10 and the subordinate computer 20 carries out the mapping in accordance with the assigned query character string, the present invention is not limited thereto, and for example, only the host computer 10 may carry out the search by referring to the hierarchical index based on the assigned query character string.

Next, each of the host computer 10 and the subordinate computer 20 creates a character string pair for the approximate character string comparison which will be described later (S203). The character string pair is composed of a character string to be subjected to comparison in a reference character string and a character string for comparison in a query character string, which include a matched character string identified by mapping.

Specifically, the host computer 10 and the subordinate computer 20 create a character string to be subjected to comparison by adding a character string having a corresponding predetermined length in the reference character string to each of the beginning and the end of the matched character string identified by the mapping. That is, the character string to be subjected to comparison is a character string in a vicinity of a matched character string that includes a matched character string identified in the reference character string. For example, in a case where the reference character string is "CCGATCTGTATACCCTACGA" and the matched character string is "TACC", for example, a character string "TATACCCT" obtained by adding two characters before and after the matched character string is the character string to be subjected to comparison. In a case of analyzing a human genome, the length of the base to be added to each of the beginning and the end of the matched character string for the reference character string may be, for example, about 50 bases.

In addition, the host computer 10 creates a character string for comparison by adding a character string having a corresponding predetermined length in the query character string to the end of the matched character string. In a case of analyzing a human genome, the length of the character string to be added to the end of the matched character string for the query character string is, for example, about 50 bases.

It is noted that in the present disclosure, although a character string having a predetermined length is added to the beginning and the end of the matched character string for the reference character string, the present disclosure is not limited thereto, and for example, a character string having a predetermined length may be added only to one of the beginning or the end. In addition, for the query character string, a character string having a predetermined length may be added to each of the beginning and the end of the matched character string, or the matched character string itself may be treated as the character string for comparison without adding the character string.

Next, the host computer 10 and the subordinate computer 20 derive at least one approximate character string based on a character string pair consisting of a character string to be subjected to comparison based on the reference character string and a character string for comparison based on the query character string (S204). A predetermined alignment using a dynamic programming method is applied to derive the approximate character string. The alignment is a method of comparing two sequences (character strings) while allowing substitution, insertion, and deletion of elements thereof, and then calculating a degree of mutation (degree of similarity) in accordance with a defined score/penalty. As an algorithm for realizing the alignment, a Smith-Waterman algorithm or a Needleman-Wunsch algorithm is known. In addition, the dynamic programming method is a method of calculating an optimal solution for the next stage based on an optimal solution obtained in a certain stage. That is, in the calculation of the degree of mutation, a score is calculated for each element of the sequence-shaped alignment table in accordance with the dynamic programming method, an element having the maximum score is determined, and as a result, at least one or more approximate character strings are derived.

As described above, in the approximate character string comparison according to the present embodiment, the hierarchical index based on the reference character string is created, the hierarchical index is subsequently searched in accordance with the given query character string to identify the matched character string (and the length thereof), and the character string pair consisting of the character string to be subjected to comparison and the character string for comparison based on the identified matched character string is subjected to the approximate character string comparison, whereby the approximate character string is derived.

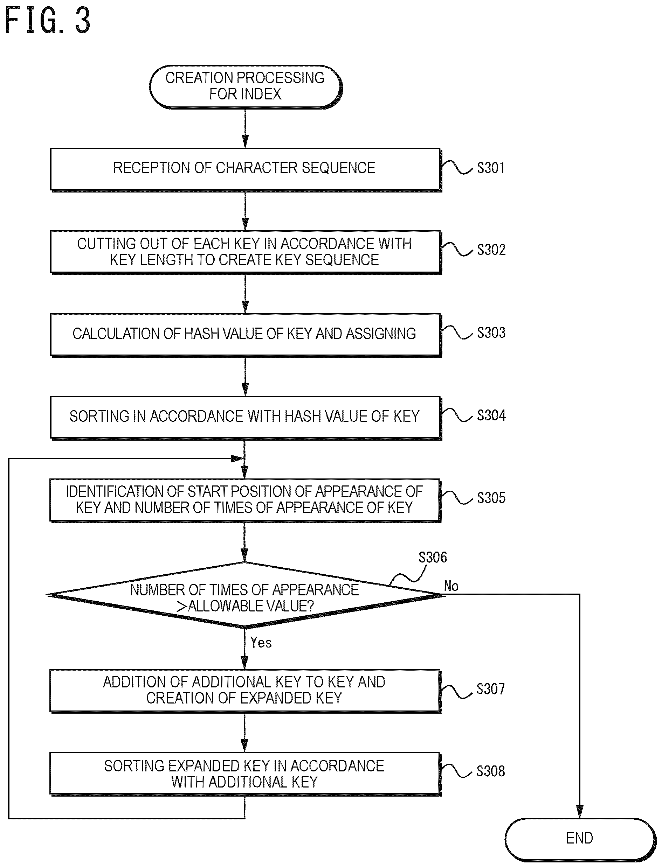

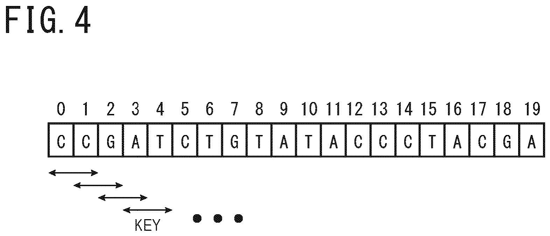

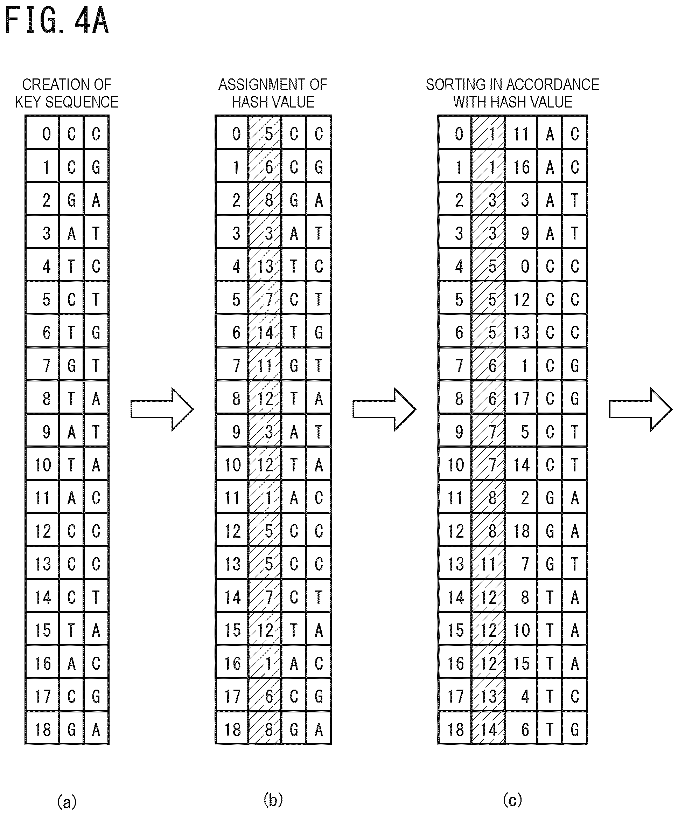

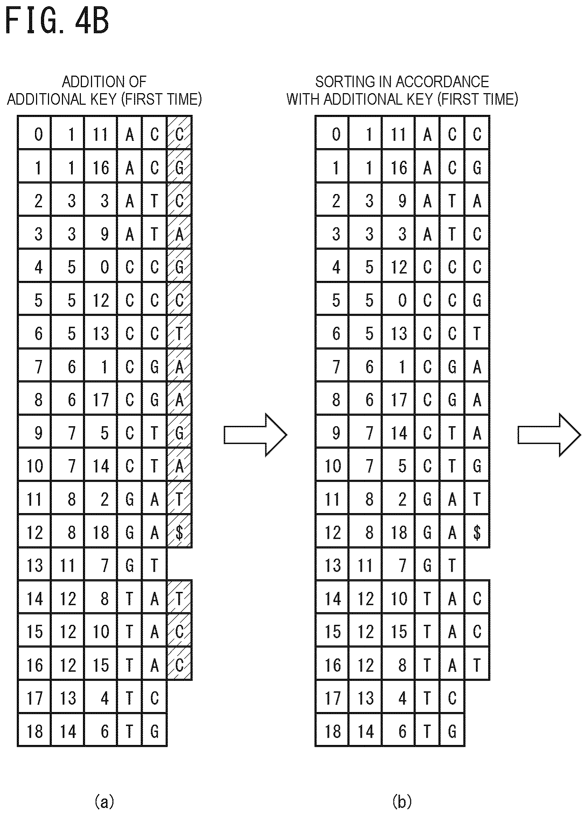

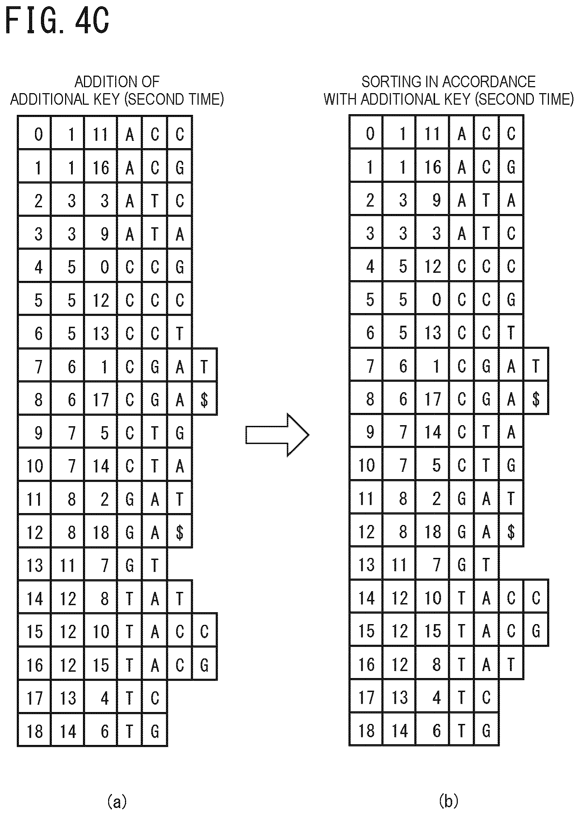

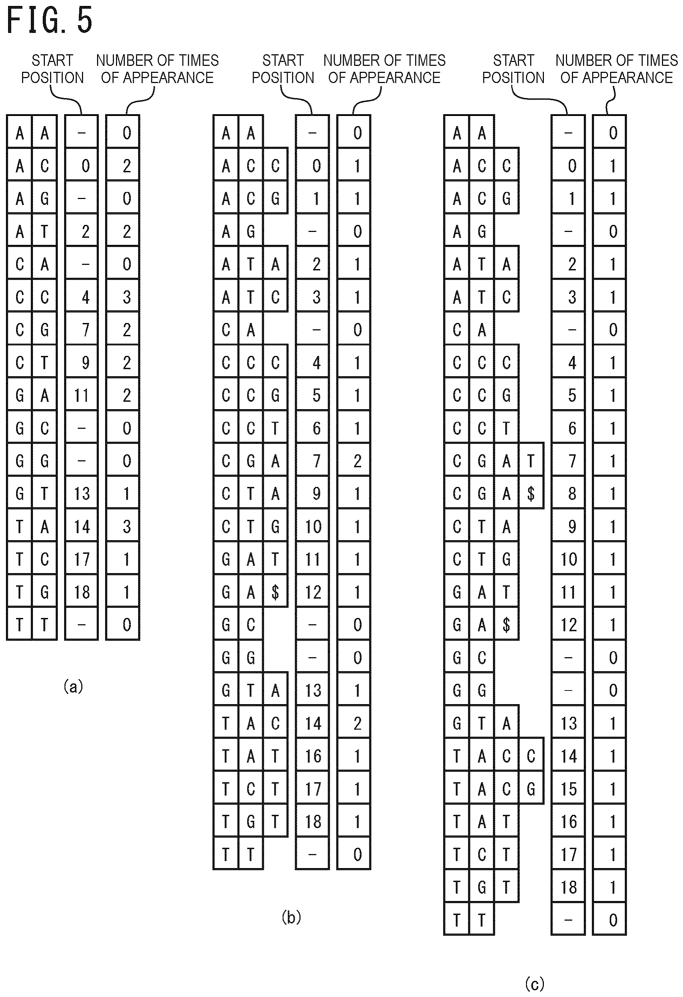

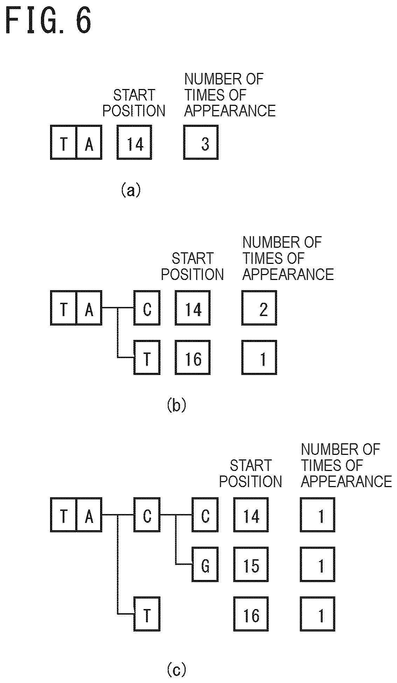

FIG. 3 is a flowchart for an explanatory description of an example of index creation processing by the computer system according to the embodiment of the present invention. That is, FIG. 3 illustrates details of the creation processing (S201) of the hierarchical index illustrated in FIG. 2. In addition, FIG. 4 is a diagram illustrative of an example of a reference character string for creating a hierarchical index, and FIGS. 4A to 4C are diagrams illustrative of an example of a data sequence structure in a process of creating the hierarchical index based on the reference character string. Further, FIG. 5 is a diagram illustrative of an example of a table structure showing a start position of appearance of a key and the number of times of appearance of the key in a process of creating a hierarchical index, and FIG. 6 is a diagram for an explanatory description of the hierarchical index.

First, as illustrated in FIG. 3, the host computer 10 receives a reference character string for creating a hierarchical index (S301). For example, in a case of a human genome reference sequence, the host computer 10 accesses the database 30 and reads out the stored human genome reference sequence. In the following description, for ease of understanding, a description will be made using, as an example, a reference character string "CCGATCTGTATACCC TACGA" composed of four kinds of characters "A", "C", "G", and "T" (see FIG. 4).

The host computer 10 cuts out each partial character string (that is, the key) from the received reference character string in accordance with a predetermined key length to create a key sequence (S302). For example, in a case where the key length is "2", the key sequence is as illustrated in FIG. 4A(a). In the drawing, the number on the left end is a sequence number. In addition, the key starting with "A" which is the 19th character at the end of the reference character string is omitted here for simplification of the description.

Next, the host computer 10 calculates a hash value for each key of the created key sequence, by using a predetermined hash function, and assigns the hash value to the key (S303). As a result, the key sequence is as illustrated in FIG. 4A(b). The hash function in the present disclosure is defined as a function that outputs a value represented by a quaternary number by numerical values "0" to "3" assigned to each of four kinds of characters "A", "C", "G", and "T"; however, the hash function is not limited thereto. For example, for the 1st key "CG", the hash value is $h(CG) = 1 \times 4 + 2 = 6$, and in addition, for the 11th key "AC", the hash value is $h(AC) = 0 \times 4 + 1 = 1$.

Next, the host computer 10 sorts each key of the key sequencer, for example, in ascending order in accordance with the assigned hash value (S304). As a result, the key sequence is as illustrated in FIG. 4A(c). In the present example, each key sequence after sorting may include a sequence number before sorting. For example, in FIG. 4A(c), the 0th key "AC" in the key sequence after sorting holds the (original) sequence number "11" before sorting, and in addition, the 1st key "AC" after sorting holds the sequence number "16" before sorting.

It is noted that, in the above example, although the calculated hash value is assigned and sorted for each cut-out key, the present invention is not limited thereto. For example, regardless of the key that is cut out from the reference character string, a key sequence in which a hash value is assigned by being calculated based on a combination of all characters appearing in the reference character string may be prepared, and the start position of appearance corresponding to the cut-out key may be assigned. That is, in the reference character string composed of four characters "A", "C", "G", and "T", for example, in a case where the length of the key is two characters, a key sequence having $4^2$ elements is first created, and further, hash values are assigned to the elements, respectively. Subsequently, the cut-out key is assigned to a corresponding element (an element of the same key) in the created key sequence together with the start position of appearance in the reference character string, thereby obtaining such a key sequence as illustrated in FIG. 4A(c).

Next, the host computer 10 identifies the start position of appearance of each key and the number of times of appearance of each key in the current key sequence (S305). FIG. 5(a) illustrates the start position of appearance of each key and the number of times of appearance of each key in the key sequence illustrated in FIG. 4A(c). For example, the key "AC" is shown to appear twice with the start position of appearance "0" (sequence number "0") as a base point in the key sequence. In addition, the key "CC" is shown to appear three times with the start position of appearance "4" as a base point. It is noted that, here, patterns (*i.e.,* 16 patterns) for the start position of appearance of the key and the number of times of appearance of the key are shown, where the patterns consist of all combinations between the respective characters, and for example, the key "AA" that is not included in the exemplified key sequence is indicated as the start position of appearance "-" and the number of times of appearance "0".

Next, the host computer 10 determines whether or not the number of times of appearance of each key exceeds a predetermined allowable value (S306). In the present disclosure, the predetermined allowable value is a value that allows the duplicate key to be present in the hierarchical index in a duplicate manner. In the present example, the predetermined allowable value is set to "1". That is, in a case where the predetermined allowable value is "1", each key has a unique presence in the hierarchical index. In addition, as the predetermined allowable value is larger, the possibility that the duplicate key is present in the hierarchical index is higher. On the other hand, the speed of creation of the hierarchical index increased. In a case where the host computer 10 makes a determination that there is a key of which the number of times of appearance exceeds a predetermined allowable value (Yes in S306), the host computer 10 adds an additional key to the key (S307).

The additional key is one or more characters that follow the key in the original character string. In the present example, the additional key is set to one character. The partial character string obtained by adding the additional key is regarded as a new key. In the following description, a new key to which the additional key has been added may be referred to as the "expanded key" in order to distinguish the new key from the original key, and the sequence thereof may be referred to as an expanded key sequence. By adding the additional key, the respective keys are identified as keys different from each other. FIG. 4B(a) illustrates an example of an expanded key sequence consisting of an expanded key in which one additional key has been added to the original key. It is noted that for the expanded key "GA" of the sequence number "12", for example, "$" is assigned as the terminal character string since there is no character that follows "A" in the original character string. In addition, for the keys having the sequence numbers "13", "17", and "18", the additional keys are not added since the number of times of appearance thereof is once.

Next, the host computer 10 further sorts each key (that is, the expanded key) in accordance with the additional key, for example, in ascending order as illustrated in FIG. 4B(b) (S308). In this case, the original sort order of the key is prioritized. In the drawing, it can be seen that, for example, the key sequences "AT" of the sequence numbers "2" and "3" are switched in terms of the order thereof due to the additional key-dependent sorting. Subsequently, the host computer 10 returns to the processing S305 and repeats the above processing until the numbers of times of appearance of all keys do not exceed a predetermined allowable value.

That is, the host computer 10 identifies the start position of appearance of each key and the number of times of appearance of each key in the key sequence (S305), and in a case where it is determined that there is no key in which the number of times of appearance exceeds a predetermined allowable value (No in S306), the processing is ended since the desired hierarchical index has been created.

FIG. 5 is a diagram for an explanatory description of the start position of appearance of the key and the number of times of appearance of the key in a process of creating a hierarchical index based on the reference character string illustrated in FIG. 4. For example, in FIG. 5(a), an additional key is added to a key having the number of times of appearance of 2 or more (FIG. 4B(a)), and each key (expanded key) is sorted in accordance with the additional key (FIG. 4B(b)). As a result, as illustrated in FIG. 5(b), the start position of appearance of each key and the number of times of appearance of each key in the current key sequence are identified. In the example illustrated in the drawing, the numbers of times of appearance of the expanded keys "CGA" and "TAC" are two. As a result, for each of these expanded keys, the additional key is added and sorted in the same manner (FIGS. 4C(a) and 4C(b)). It is noted that, for example, "$" is assigned as the terminal character string for the key "CG" of the original sequence number "17" (the sequence number "8" after sorting in accordance with the hash value) since there is no character that follows the key "A". As a result, as illustrated in FIG. 5(c), the start position of appearance of the key and the number of times of appearance of the key are identified. Through the process as described above, the index creation processing is ended since the numbers of times of appearance of all the expanded keys are "1".

As an example, a key "TA" is considered. Since the key "TA" is present in the sequence numbers "14" to "16" (see FIG. 4A(c)), the start position of appearance thereof is "14", and the number of times of appearance thereof is "3" as illustrated in FIG. 6(a). Next, by adding an additional key to the key "TA" and then sorting the key "TA" (see FIG. 4B(b)), for an expanded key "TAC" including an additional key "C", the start position of appearance thereof is "14", and the number of times of appearance thereof is "2", whereas for an expanded key "TAT" including an additional key "T", the start position of appearance thereof is "16", and the number of times of appearance thereof is "1" as illustrated in FIG. 6(b). As a result, the additional keys "C" and "G" are further added to the key "TAC" having the number of times of appearance of "2", and as a result, the number of times of appearance of the key "TACG" is "1" as illustrated in FIG. 6(c). In this way, the expanded key sequence is grasped as a hierarchical tree structure.

In a manner as described above, the host computer 10 creates a hierarchical index based on, for example, a human genome reference sequence. Since such a hierarchical index is sorted in accordance with the hash value, a partial data sequence structure of the hierarchical index associated with a specific key (partial character string) is intensively expanded in a specific address region in the main memory (sequentialization of data), and as a result, the number of times of random access to the main memory can be significantly reduced.

It is noted that, in the above description, although a description has been made using, as an example for simplification, a very short character string, for example, in a case of treating a human genome, it is preferable that the key length of the partial character string is set to about 10 to 20, the key length of the additional key is set to 2 to 8, and the predetermined allowable value is set to 5 to 40, and it is more preferable that the key length of the partial character string is set to about 10 to 15, the key length of the additional key is set to 2 to 4, and the predetermined allowable value is set to 10 to 20.

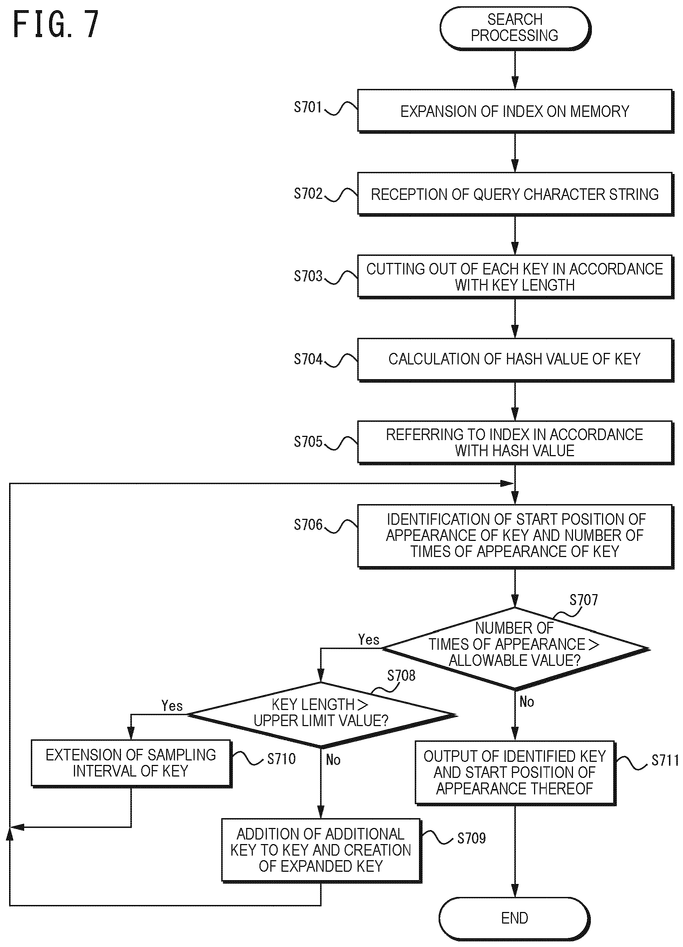

FIG. 7 is a flowchart for an explanatory description of an example of search processing for a reference character string based on a query character string by the computer system according to the embodiment of the present invention. That is, FIG. 7 illustrates details of the search processing (S202) for the reference character string based on the query character string illustrated in FIG. 2. By such a search processing, a predetermined key in the query character string is subjected to mapping in the reference character string, and a matched character string in the reference character string and a start position of appearance thereof are identified. It is noted that, in the following description, although the search processing by the host computer 10 is described, the same applies to the search processing by the subordinate computer 20 that is operated in parallel.

As illustrated in this figure, the host computer 10 reads out the hierarchical index from the database 30 and then expands and stores the hierarchical index on the memory (S701). From the viewpoint of high-speed, the host computer 10 continuously expands and stores the data constituting the hierarchical index on the main memory. It is noted that the continuous expansion includes that the data is arranged at continuous memory addresses in the same bank.

Next, the host computer 10 receives a query character string for subjecting the reference character string to mapping (S702). For example, in a case where the reference character string is a human genome reference sequence, the query character string is a data piece of base pairs that are read out from a sequencer. In the following description, for ease of understanding, a description will be made assuming that the query character string is "TACC".

Next, the host computer 10 continuously cuts out each key in accordance with a predetermined key length for the received query character string (S703). In the present example, it is assumed that the initial value of the predetermined key length is "2". As a result, the respective cut-out keys are "TA", "AC", "CC", and "C$". In addition, in the present example, it is assumed that the initial value of the sampling interval of each key is 1. The sampling interval of the key is an interval of a start position for sequentially referring to the hierarchical index in accordance with the key. It is noted that in a case of analyzing the human genome, the initial value of the sampling interval may be, for example, about 3 to 5. As will be described later, the sampling interval is extended according to the length of the key.

Subsequently, the host computer 10 calculates a hash value for each cut-out key using a predetermined hash function (S704). As described above, the hash function is defined as a function that outputs a value represented by a quaternary number by numerical values "0" to "3" assigned to four kinds of characters "A", "C", "G", and "T", respectively. For example, for the key "TA", the hash value is $h(TA) = 3 \times 4 + 0 = 12$.

Next, the host computer 10 refers to the hierarchical index in accordance with the calculated hash value (S705) and identifies the start position of appearance of each key and the number of times of appearance of each key in the reference character string (S706). For example, in a case of the key "TA", the start position of appearance in the hierarchical index is identified to be 14, and the number of times of appearance is identified to be 3 in accordance with the hash value (see FIG. 6(a)).

Next, the host computer 10 determines whether or not the number of times of appearance of each key exceeds a threshold value of the predetermined number of times (S707). As described above, in the present example, the predetermined allowable value is set to 1. In a case where it is determined that the number of times of appearance of the key exceeds the predetermined allowable value (Yes in S707), the host computer 10 subsequently determines whether or not the current key length exceeds the predetermined upper limit value (S708). The predetermined upper limit value may be, for example, about 20 in a case of the analysis of the human genome; however, the predetermined upper limit value is not limited thereto.

In a case where it is determined that the current key length does not exceed the predetermined upper limit value for each key (No in S708), the host computer 10 adds an additional key to the key to create an expanded key (S709) and returns to the processing of S706.

For example, the host computer 10 adds the additional key "C" to the key "TA", examines the number of times of appearance thereof (see FIG. 6(b)), further adds the additional key "C" to the key (expanded key) to which the additional key has been added, examines the number of times of appearance thereof (see FIG. 6(c)), and repeats the operation until the number of times of appearance is 1.

On the other hand, in a case where it is determined that the current key length exceeds the predetermined upper limit value for each key (Yes in S708), the host computer 10 extends (increases) the sampling interval of the key (S710) and returns to the processing of S706. It is noted that the extension of the sampling interval may be allowed to be carried out a predetermined number of times (for example, once) for the key.

In addition, in a case where it is determined that the number of times of appearance of the current key (that is, the expanded key) does not exceed the predetermined allowable value (No in S707), the host computer 10 outputs the key (matched character string) in the identified reference character string and the start position of appearance thereof (S711).

In a manner as described above, the host computer 10 can find at least a part of the query character string from the reference character string by using the hierarchical index. In particular, according to the present embodiment, since each key of the hierarchical index is sorted in accordance with the hash value, the search in accordance with the query character string is carried out on the partial and continuous data sequence structure in the hierarchical index, and thus the number of times of random access to the main memory can be significantly reduced.

In addition, in the search for the hierarchical index, the sampling interval of the start position of appearance is extended in a case where the length of the current key (expanded key) is equal to or longer than a certain length. Therefore, the number of searches is efficiently reduced, and the search speed can be increased. On the other hand, the extension of the sampling interval may increase the probability of overleaping the key that should originally be identified; however, the sampling interval is increased in a case where the length of the key is equal to or longer than a certain length, and thus occurrence of such overleaping is effectively suppressed.

Next, an alignment using a dynamic programming method will be described. That is, the host computer 10 executes alignment processing using a dynamic programming method in order to estimate how much the query character string (the character string for comparison) is mutated (degree of mutation) with respect to the character string (the character string to be subjected to comparison) in the vicinity of the identified start position of appearance in the reference character string.

The alignment is a method of comparing two sequences (character strings) while allowing substitution, insertion, and deletion of elements thereof, and then calculating a degree of mutation (degree of similarity) in accordance with a defined score/penalty. For example, in a comparison between a character string X (i.e., a character string to be subjected to comparison based on the reference character string) and a character string Y (*i.e.,* a character string for comparison based on the query character string), it is determined that the character string Y does not match the character string X in a case where a part of characters of the character string Y is substituted, inserted, or deleted. That is, it can be said that the relationship between the characters at the respective positions in the respective character strings X and Y is any of a case of matching (match), a case of not matching (mismatch), or a case where a character at one position is not present (gap). Here, a score in a case of matching is denoted as, for example, "+2", a score in a case of mismatch is denoted as, for example, "-1", and a score in a case of a gap is denoted as, for example, "-2". Then, each element (character) of the character string X and the character string Y is compared, and then the degree of mutation of each element is calculated using these scores. In the present disclosure, an improved alignment algorithm based on a Needleman-Wunsch algorithm, which is an example of global alignment, is used for calculating the degree of mutation. Hereinafter, a basic idea of the Needleman-Wunsch algorithm will be described, and further, an improved alignment algorithm applied to the present invention will be described.

For example, in a comparison between a character string $X = x_1 x_2 .. x_i$ and a character string $Y = y_1 y_2 .. y_j$, a degree of mutation $F(i, j)$ between the character $x_i$ and the character $y_j$ is defined as follows:

[Equation 1]

$$\text{F(i, j)} = \max \begin{Bmatrix} F(i-1, j-1) + s(x_i, y_j) \\ F(i-1, j) - d \\ F(i, j-1) - d \end{Bmatrix} \cdots \text{Equation 1}$$

where, max is a function that outputs the maximum value from the values of the given equation, s is a score function (match: s = 2, mismatch: s = -1, gap: s = -2), and d is a penalty due to the gap (d = 2).

In the following description, for ease of understanding, alignment between a character string to be subjected to comparison "GCCTCGCT" and a character string for comparison "GCCATTCA" using a dynamic programming method will be described.

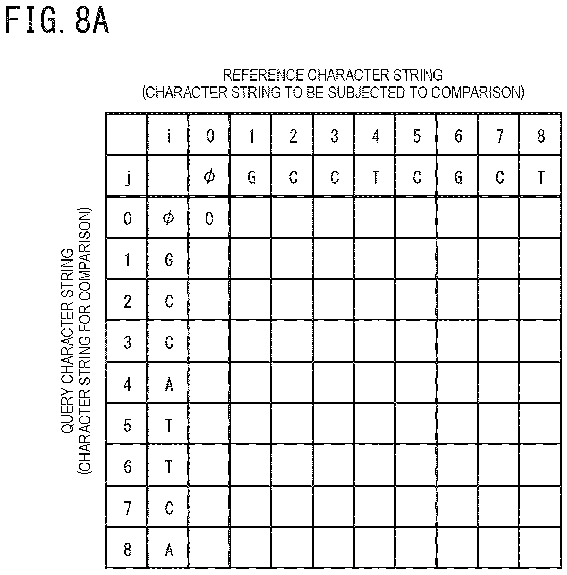

FIG. 8A is an alignment table in which character strings as comparison targets in the present example are arranged. In the table, "$\varphi$" is an empty character, and it is assumed that $F(0, 0) = 0$. In addition, in Equation 1, in a case where the argument of the degree of mutation $F(i, j)$ is a negative value, such a case is out of the range, and thus the calculation is omitted (the output is set to Null). The alignment table is expanded on the memory as a certain type of data structure and is used for a processor.

First, in a case of j = 0, for F(1, 0), from Equation 1, those in the max function are, respectively,

$$F(0, -1) + s(x_1, y_0) = \text{Null},$$

$$F(0, 0) - d = 0 - 2 = -2,$$

and

$$F(1, -1) - d = \text{Null},$$

and thus

$$F(1, 0) = -2.$$

Next, F(2, 0) is,

$$F(2, 0) = F(1, 0) - d = -4.$$

Similarly, F(n, 0) = -nd, and

$$F(0, n) = -nd.$$

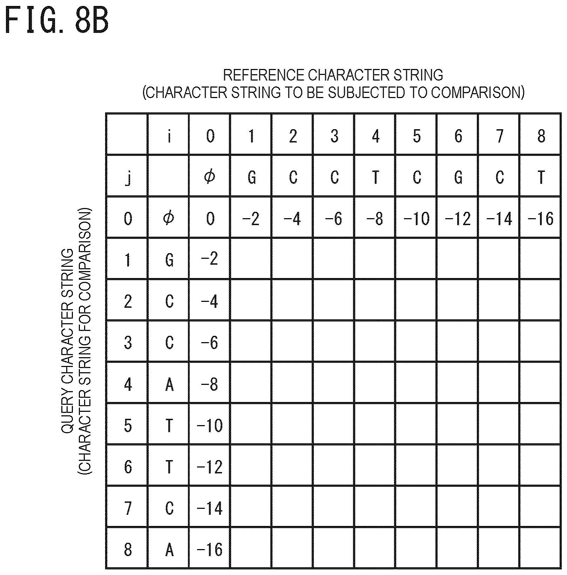

Therefore, the alignment table is as illustrated in FIG. 8B.

Next, the calculation is carried out in the same manner even in a case where j = 1. For F(1, 1), those in the max function are, respectively,

$$F(0, 0) + s(x_1, y_1) = 0 + 2 = 2,$$

$$F(0, 1) - d = -2 - 2 = -4,$$

and

$$F(1, 0) - d = -2 - 2 = -4,$$

and as a result,

$$F(1, 1) = 2,$$

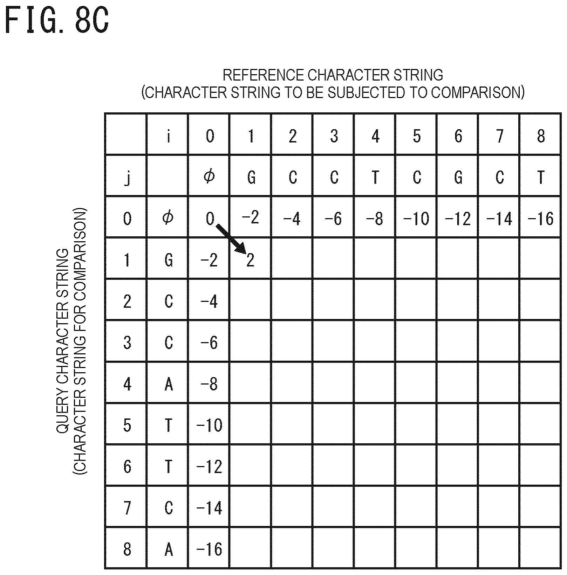

and the alignment table is as illustrated in FIG. 8C.

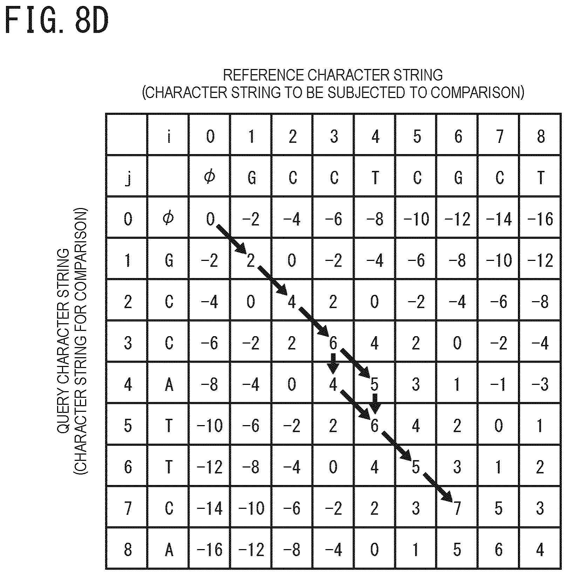

By repeating the above calculation in the same manner, an alignment table as illustrated in FIG. 8D is created. In the created alignment table, the degree of mutation F(6, 7) at the element position (6, 7) has the maximum value of "7". As a result, as illustrated in this figure, backtracking is carried out from the element position (6, 7) to the element position (1, 1). In the table, an arrow in a lower right oblique direction indicates a match of characters, an arrow in a right direction indicates a deletion, and an arrow in a downward direction indicates an insertion. As a result, an approximate character string "GCC<A>T[T]G" is derived. However, it is assumed that the symbol "< >" indicates an insertion between characters, and the symbol "[ ]" indicates a substitution. That is, it can be seen that, in a case of a reference character string "GCCTCG", the query character string is such that "A" is inserted between "C" and "T" of the reference character string, and "C" of "TCG" of the reference character string is substituted with "T".

As described above, the approximate character string can be derived from a specified element position by specifying the element position where the degree of mutation is the maximum value in the alignment table in accordance with the Needleman-Wunsch algorithm. However, in the Needleman-Wunsch algorithm, the degree of mutation of all elements of the alignment table is calculated. Therefore, the amount of calculation is enormous, and it takes a long time. Therefore, in the present disclosure, such an improved alignment algorithm as described below is proposed, and as a result, the amount of calculation is reduced, and the processing speed is increased.

Specifically, the improved alignment algorithm applied to the present invention schematically includes determining a calculation region having a predetermined width, where an element positioned on a diagonal line in the alignment table is centered, calculating a degree of mutation only for the element in the calculation region to determine a maximum value thereof, and deriving an approximate character string from the element based on the maximum value in a case where the maximum value satisfies a predetermined condition. In a case where the maximum value does not satisfy the predetermined condition, the calculation region is expanded, and in the same manner, the maximum value is determined by calculating the degree of mutation, and the repetition is carried out until the maximum value satisfies the predetermined condition.

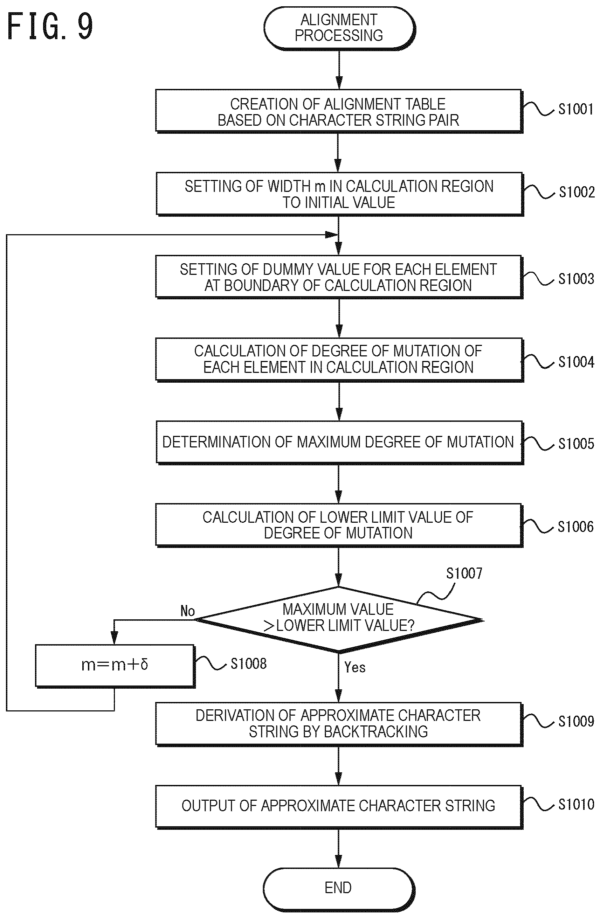

FIG. 9 is a flowchart for an explanatory description of an example of alignment processing using a dynamic programming method by the computer system according to the embodiment of the present invention. That is, FIG. 9 illustrates details of the alignment processing (S204) illustrated in FIG. 2. It is noted that, in the following description, although the alignment processing based on one query character string by the host computer 10 is described, the same applies to the alignment processing based on another query character string by the subordinate computer 20 that is operated in parallel.

As illustrated in this figure, the host computer 10 creates an alignment table based on a character string pair consisting of the character string to be subjected to comparison and the character string for comparison (S1001). As described above, the alignment table is expanded on the memory as a certain type of data structure.

Next, the host computer 10 sets the width m (where m is a positive integer) of the calculation region to an initial value (S1002). The initial value of the width m may be, for example, a length of the matched character string obtained by the mapping, but the initial value thereof is not limited thereto. In addition, the width m is set to an odd value since the width m has an element position on the diagonal line of the alignment table as a center, but the width m is not limited thereto. As a result, a calculation region having the width m with an element position on the diagonal line of the alignment table as a center is determined.

Subsequently, the host computer 10 sets a predetermined dummy value for each element that defines the boundary of the calculation region (S1003). Regarding the dummy value, a sufficiently small value is selected as the value of the degree of mutation F. For example, the dummy value is a negative value of, for example, about 2 to 3 times the width m of the initial value, and it can be set to any value.

Next, the host computer 10 calculates the degree of mutation F for each element in the calculation region in accordance with Equation 1 (S1004). Subsequently, the host computer 10 determines a maximum degree of mutation $F_{max}$ having the maximum value in the calculation region and specifies the position of the element (S1005). It is noted that the element having the maximum degree of mutation $F_{max}$ is not necessarily one.

In addition, the host computer 10 calculates a lower limit value $F_{Low}$ of the degree of mutation F in the row or the column of the alignment table (S1006). The lower limit value $F_{Low}$ is a value of the degree of mutation F in a case where it is assumed that there are m consecutive gaps and the other portions are completely or substantially matched in a case where the reference character string and the query character string are compared in the row or the column. That is, the calculation is carried out as follows.

The lower limit value $F_{Low}$ is,

$$F_{Low} = (\text{length of character string} - m) \times s \ \ldots$$

$$\text{Equation 2.}$$

Here, s = 2.

Next, the host computer 10 compares the maximum degree of mutation $F_{max}$ with the lower limit value $F_{Low}$ to determine whether or not the maximum degree of mutation $F_{max}$ exceeds the lower limit value $F_{Low}$ (S1007). In a case where it is determined that the maximum degree of mutation $F_{max}$ does not exceed the lower limit value $F_{Low}$ (No in S1007), the host computer 10 expands the width m by a predetermined size $\delta$ (S1008). For example, $\delta$ is set to m + 1 (here, m is set not to exceed the number of characters of the character string).

The host computer 10 carries out the processing in the same manner on the calculation region having the expanded width m and repeats the processing until the maximum value $F_{max}$ exceeds the lower limit value $F_{Low}$.

In a case where it is determined that the maximum value $F_{max}$ exceeds the lower limit value $F_{Low}$ (Yes in S1007), the host computer 10 carries out backtracking from the position of the element having the maximum value to determine the approximate character string (S1009). Then, the host computer 10 outputs the determined approximate character string (S1010).

For example, an example of calculating a degree of mutation between a character string to be subjected to comparison "GGGATCCGATAATCGGTCCCCTAGG" (24 characters) and a character string for comparison "GGGCATT CAACATAAGTCGGCCTG" (24 characters) by the alignment method according to the present invention will be described. It is noted that the point that Equation 1 is used to calculate the degree of mutation F is the same as in the above-described example. It is noted that the length of the character string to be subjected to comparison and the length of the character string for comparison do not need to be matched, and typically, the length of the character string to be subjected to comparison is longer than the length of the character string for comparison.

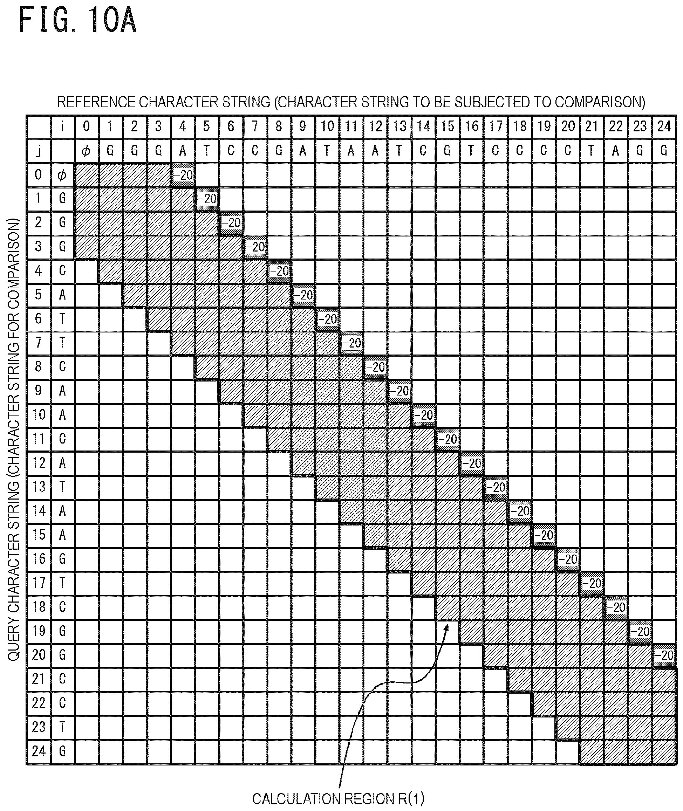

First, the host computer 10 prepares an alignment table in which character strings as comparison targets are arranged, and the host computer 10 sets an initial value of the width m. In the present example, it is assumed that the initial value of the width m(0) is 7. In addition, the host computer 10 sets a dummy value for an element of a boundary portion of a calculation region defined in accordance with the width m. In the present example, it is assumed that the dummy value is -20. FIG. 10A illustrates an alignment table in which a dummy value is set. In the table, the element subjected to hatching is a calculation region R(0) having a width m(0) = 7.

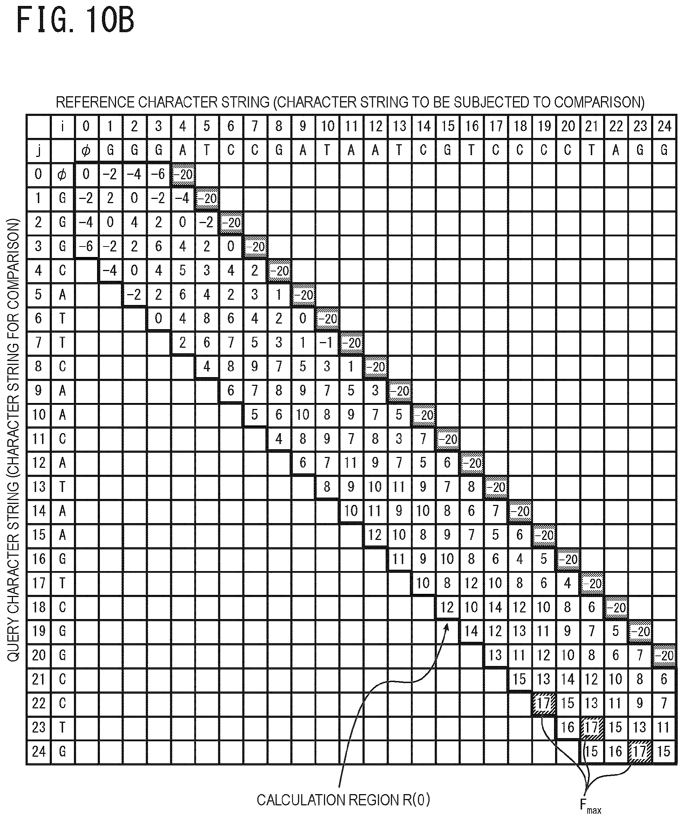

The host computer 10 calculates the degree of mutation F of each element in the calculation region R(0) in accordance with Equation 1. FIG. 10B illustrates a state in which the degree of mutation F of each element in the calculation region is calculated. The host computer 10 determines the maximum degree of mutation $F_{max}$ from the calculated degrees of mutation F. In the present example, the maximum degree of mutation $F_{max}$ is 17. In the figure, elements having the maximum degree of mutation $F_{max}$ of 17 are hatched.

Subsequently, the host computer 10 calculates a lower limit value $F_{Low}$ in a row or a column of the alignment table. In the present example, the lower limit value $F_{Low}$ is,

$$F_{Low} = (24 - m) \times s = 17 \times 2 = 34.$$

Subsequently, the host computer 10 compares the maximum degree of mutation $F_{max}$ with the lower limit value $F_{Low}$, and based on this comparison, the host computer 10 makes a determination that the maximum degree of mutation $F_{max}$ does not exceed the lower limit value $F_{Low}$. Therefore, the width m is expanded by $\delta$. In the present example, the width m(1) is widened to 15. In addition, the calculation region of the expanded width m(1) is denoted as R(1).

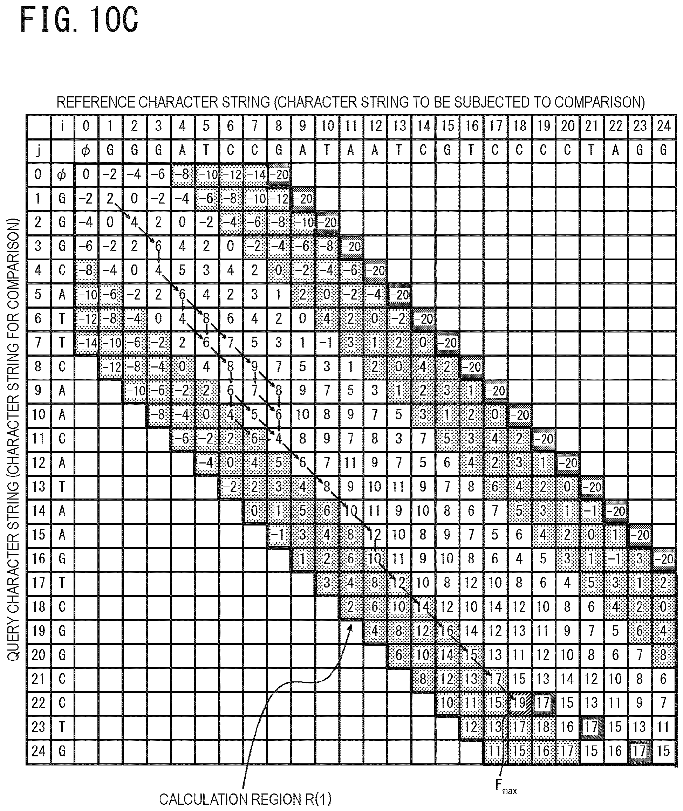

In the same manner, the host computer 10 calculates the degree of mutation F of each element in the calculation region R(1) in accordance with Equation 1. FIG. 10C shows a state in which the degree of mutation F of each element in the calculation region is calculated. In the drawing, a region obtained by expanding, by performing adding to the calculation region R(1), is subjected to hatching. As a result, the maximum degree of mutation $F_{max}$ is 19. In addition, the lower limit value $F_{Low}$ in this case is 18.

Accordingly, the host computer 10 makes a determination that the maximum degree of mutation $F_{max}$ exceeds the lower limit value $F_{Low}$. Therefore, the host computer 10 carries out backtracking from the element having the maximum degree of mutation $F_{max}$ = 19 and specifies the approximate character string in accordance with the path obtained by the backtracking.

That is, in the example illustrated in FIG. 10C, the host computer 10 identifies an element having the largest value of the degree of mutation F among the elements adjacent toward an element (0, 0) direction, by using the element (18, 22) having the maximum degree of mutation $F_{max}$ = 19 as a starting point (current element position), and carries out a transition to the identified element. As a result, the element (17, 21) having the degree of mutation F = 17 is the current element position. The approximate character string is finally derived by repeating such a transition to the element (0, 0). It is noted that the path obtained by the backtracking is not limited to one and a plurality of paths may be present.

More specifically, in the alignment table illustrated in FIG. 10C, there are six paths obtained by backtracking, and the approximate character strings in accordance with the respective path are as follows.

(a) First path: GGG<C>A<T>TC<AA>C-ATAA<G>TCG[G]CC
(b) Second path: GGG<C>A<T>TC<A>[A][C]ATAA<G>TCG[G]CC
(c) Third path: GGG<C>AT[T]C<A>[A][C]ATAA<G>TCG[G]CC
(d) Fourth path: GGG<C>AT[T]C[A]<AC>ATAA<G>TCG[G]CC
(e) Fifth path: GGG<C>A<T>TC<AA>C-ATAA<G>TCG[G]CC
(f) Sixth path: GGG<C>AT<T>C<A>[A][C]ATAA<G>TCG[G]CC

Here, it is assumed that a symbol "< >" indicates an insertion between characters, a symbol "[ ]" indicates a substitution of a character, and a symbol "-" indicates a deletion of a character.

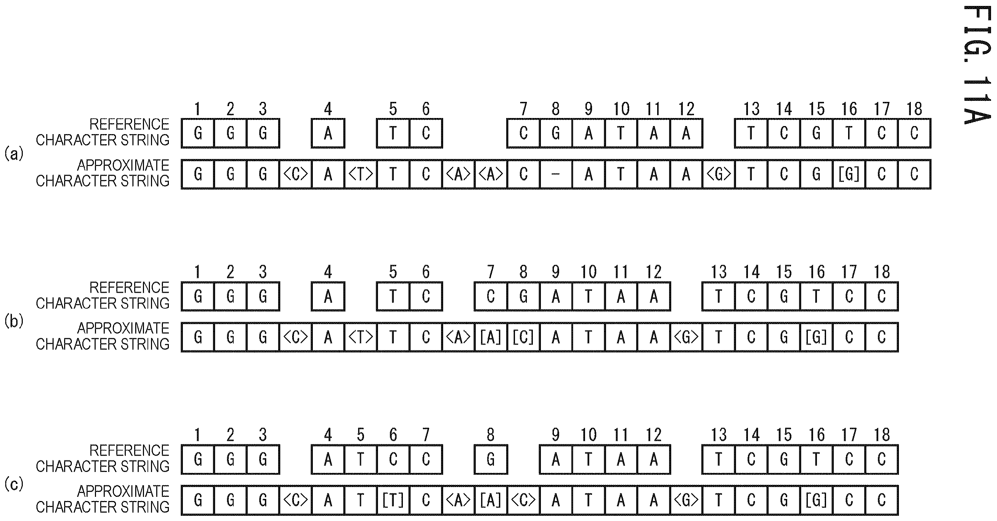

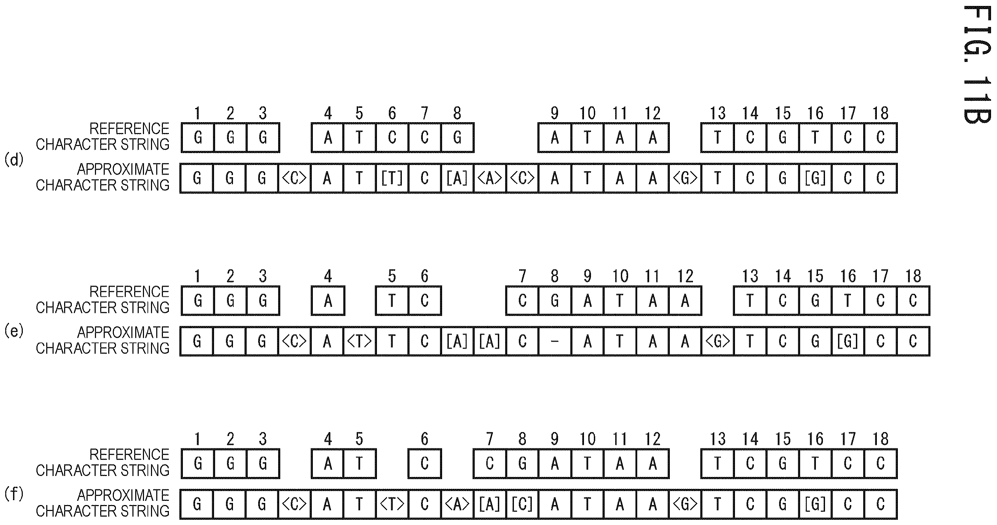

It is noted that, for ease of understanding, the approximate character string in accordance with each of the paths described above is illustrated in FIGS. 11A and 11B in the comparison with the reference character string.

In this way, in the improved alignment algorithm, instead of calculating the degree of mutation for all the elements of the alignment table, a calculation region having a predetermined width is determined, and the degree of mutation is calculated while expanding the calculation region in a range as necessary. Therefore, the amount of calculation can be reduced, and as a result, it is possible to increase the processing speed.

As described above, according to the present embodiment, after the hierarchical index based on the reference character string is created, the matched character string (and the length thereof) is identified by searching for the hierarchical index in accordance with the given query character string, and the character string pair consisting of the character string to be subjected to comparison and the character string for comparison based on the identified matched character string is subjected to the approximate character string comparison, whereby the approximate character string is derived.

Each of the embodiments described above is an illustration for describing the present invention, and the present invention is not intended to be limited only to these embodiments. The present invention may be implemented in various forms without departing from the gist thereof.

For example, in any method disclosed in the present specification, steps, operations, or functions may be carried out in parallel or in a different order unless the results are consistent. The steps, operations, and functions described above are provided as mere examples, and some of the steps, operations, and functions may be omitted within departing from the gist of the invention or may be combined into a single unit, or other steps, operations, or functions may be added.

In addition, in the present specification, while various embodiments are disclosed, certain features (technical matters) in one embodiment may be added to or replaced with certain features in other embodiments, with improvements suitably, and such forms are also included in the gist of the present invention.

Reference Signs List

1:      computer system
10:     host computer
20:     subordinate computer
30:     database

**Claims**

1.  A computer program for causing a computing device to execute a method for retrieving an approximate character string in a reference character string based on a query character string,

    wherein the method includes
    creating a hierarchical index based on the reference character string,
    performing mapping of the query character string with respect to the reference character string by referring to the hierarchical index to identify a partial character string in the reference character string that matches at least a part of the query character string, and
    deriving, as the approximate character string, a character string that approximates a character string to be subjected to comparison, based on the character string to be subjected to comparison based on the reference character string and a character string for comparison based on the query character string, which are created based on the partial character string identified by the mapping,
    wherein the creating of the hierarchical index includes
    cutting out each of first keys having a predetermined length from the reference character string,
    creating a first key sequence in which a hash value calculated based on the first key by a predetermined hash function is assigned for each of the cut-out first keys,
    updating the created first key sequence, and outputting the updated first key sequence as the hierarchical index, and
    wherein the updating of the first key sequence includes
    identifying the number of times of appearance of the first key in the reference character string for each of the first keys in the first key sequence, and
    adding a first additional key consisting of at least one or more characters following the first key in the reference character string to the first key in accordance with the number of times of appearance of the identified first key, and then updating the first key sequence.

2. The computer program according to claim 1,
wherein the creating of the first key sequence includes sorting each of the first keys in the first key sequence in accordance with the hash value.

3. The computer program according to claim 1 or 2,

wherein the updating of the first key sequence includes
determining whether or not the identified number of times of appearance exceeds a predetermined allowable value,
creating a new first key by adding the first additional key consisting of at least one or more characters following the first key in the reference character string to the first key in a case where the identified number of times of appearance is determined to exceed the predetermined allowable value, and
identifying the number of times of appearance of the new first key in the reference character string for the new first key.

4. The computer program according to any one of claims 1 to 3,
wherein the updating of the first key sequence further includes sorting the new first keys in the first key sequence in accordance with the first additional key.

5. The computer program according to claim 3 or 4,
wherein the updating of the first key sequence includes creating a new first key by sequentially adding a new first additional key to the current first key until the identified number of times of appearance is determined not to exceed the predetermined allowable value.

6. The computer program according to any one of claims 3 to 5,
wherein the outputting of the first key sequence as the hierarchical index includes outputting the current first key sequence as the hierarchical index in a case where the identified number of times of appearance is determined not to exceed the predetermined allowable value.

7. The computer program according to any one of claims 1 to 6,

wherein the performing of the mapping includes
cutting out each of the second keys having a predetermined length from the query character string,
creating a second key sequence in which a hash value calculated based on the second key by the predetermined hash function is assigned for each of the second keys cut out from the query character string, and
identifying a start position of appearance of the second key and the number of times of appearance of the second key in accordance with the hash value by referring to the hierarchical index for each of the second keys at a predetermined sampling interval.

8. The computer program according to claim 7,

wherein the identifying of the start position of appearance of the second key and the number of times of appearance of the second key includes
determining whether or not the number of times of appearance of the second keys exceeds the predetermined allowable value,
creating a new second key by adding a second additional key consisting of at least one or more characters following the second key in the query character string to the second key in a case where the number of times of appearance of the second key is determined to exceed the predetermined allowable value, and
outputting the identified current second key as the partial character string and outputting the start position of appearance of the second key in a case where the number of times of appearance of the second key is determined not to exceed the predetermined allowable value.

9. The computer program according to claim 8,
wherein the identifying of the start position of appearance of the second key and the number of times of appearance of the second key further includes creating the new second key by sequentially adding a new second additional key to the current second key until the identified number of times of appearance of the second key is determined not to exceed the predetermined allowable value.

10. The computer program according to claim 8 or 9,
wherein the predetermined sampling interval of the second key is increased in a case where the number of times of appearance of the second key is determined to exceed the predetermined allowable value.

11. The computer program according to any one of claims 8 to 10,

wherein the deriving for the approximate character string includes
receiving a character string pair consisting of the character string to be subjected to comparison and the character string for comparison, which is based on the partial character string identified by the mapping,
executing predetermined alignment processing to derive at least one approximate character string based on the character string pair, and
outputting the derived at least one approximate character string.

12. The computer program according to claim 11,

wherein the executing of the predetermined alignment processing includes
creating a predetermined alignment table based on the character string to be subjected to comparison and the character string for comparison,
setting a calculation region having a width m where elements on a diagonal line in the alignment table are centered,
calculating a degree of mutation for each element in the set calculation region,
determining a maximum degree of mutation based on the calculated degree of mutation, and
deriving the at least one approximate character string based on the determined maximum degree of mutation.

13. The computer program according to claim 12,

wherein the executing of the predetermined alignment processing includes
comparing the maximum degree of mutation with a predetermined lower limit value to determine whether the maximum degree of mutation exceeds the predetermined lower limit value,
expanding the width m of the calculation region to set a new calculation region in a case where the maximum degree of mutation is determined not to exceed the predetermined lower limit value, and
deriving the at least one approximate character string based on an element having the maximum degree of mutation in a case where the maximum degree of mutation is determined to exceed the predetermined lower limit value, and
wherein setting a new calculation region by expanding the calculation region and calculating the degree of mutation are repeated until the maximum degree of mutation is determined to exceed the lower limit value.

14. The computer program according to claim 13,
wherein the predetermined lower limit value is a value of a degree of mutation in a case where it is assumed that there are m consecutive gaps in a predetermined element array and the other portions are matched.

15. The computer program according to any one of claims 11 to 14, further comprising:

creating the character string to be subjected to comparison by adding a corresponding predetermined character string in the reference character string to the partial character string; and
creating the character string for comparison by adding a corresponding predetermined character string in the query character string to the partial character string.

16. A computer program for causing a computing device to execute a method of creating a hierarchical index for performing a search in a reference character string based on a query character string,

wherein the method includes
cutting out each of first keys having a predetermined length from the reference character string,
creating a first key sequence in which a hash value calculated based on the first key by a predetermined hash function is assigned for each of the cut-out first keys,
updating the created first key sequence, and

outputting the updated first key sequence as the hierarchical index, and
wherein the updating of the first key sequence includes
identifying a start position of appearance of the first key and the number of times of appearance of the first key in the reference character string for each of the first keys in the first key sequence, and
adding a first additional key consisting of at least one or more characters following the first key in the reference character string to the first key in accordance with the identified start position of appearance of the first key and the identified number of times of appearance of the first key, and then updating the first key sequence.

17. A computer program for causing a computing device to execute a method of performing mapping of a query character string with respect to a reference character string,

wherein the method includes
reading a hierarchical index consisting of a first key sequence in which a hash value calculated based on the first key by a predetermined hash function is assigned for each of first keys cut out from the reference character string and for each of the first keys, where the first key sequence is such that an additional key is added to the first key in accordance with a start position of appearance of the first key and the number of times of appearance of the first key in the reference character string,
cutting out each of the second keys having a predetermined key length from the query character string,
creating a second key sequence in which a hash value calculated based on the second key by a predetermined hash function is assigned for each of the second keys cut out from the query character string,
identifying a start position of appearance of the second key and the number of times of appearance of the second key by referring to the hierarchical index for each of the second keys at a predetermined sampling interval in accordance with the hash value and comparing the second key with the first key in the first key sequence,
determining whether or not the identified number of times of appearance exceeds a predetermined threshold value,
creating a new second key by adding an additional key consisting of at least one or more characters following the second key in the query character string to the second key in a case where the identified number of times of appearance is determined to exceed a predetermined allowable value, and
outputting the identified start position of appearance of the current second key and the key in a case where the identified number of times of appearance is determined not to exceed the predetermined threshold value, and
wherein the identifying of the start position of appearance of the second key and the number of times of appearance of the second key includes creating the new second key by sequentially adding the new additional key to the current second key until the identified number of times of appearance is determined not to exceed the predetermined threshold value.

18. The computer program according to claim 17,
wherein the method is configured to increase the predetermined sampling interval of the second key in a case where the identified number of times of appearance is determined to exceed the predetermined allowable value.

19. A computer program for causing a computing device to execute a method of identifying a mutation between a partial character string in a reference character string and a query character string by predetermined alignment processing,

wherein the method includes
receiving a character string pair consisting of a character string to be subjected to comparison based on the reference character string and a character string for comparison based on the query character string, which are created based on the partial character string identified by mapping,
executing predetermined alignment processing to derive, as at least one approximate character string, a character string that approximates the character string to be subjected to comparison based on the character string pair, and
outputting the derived at least one approximate character string, and
wherein the executing of the predetermined alignment processing includes
creating a predetermined alignment table based on the character string to be subjected to comparison and the character string for comparison,
setting a calculation region having a width m where elements on a diagonal line in the alignment table are centered,
calculating a degree of mutation for each element in the set calculation region,
determining a maximum degree of mutation based on the calculated degree of mutation, and
deriving the at least one approximate character string based on the determined maximum degree of mutation.

20. The computer program according to claim 19,

wherein the executing of the predetermined alignment processing includes
comparing the maximum degree of mutation with a predetermined lower limit value to determine whether or not the maximum degree of mutation exceeds the predetermined lower limit value,
expanding the width m of the calculation region to set a new calculation region in a case where the maximum degree of mutation is determined not to exceed the predetermined lower limit value, and
deriving the at least one approximate character string based on an element having the maximum degree of mutation in a case where the maximum degree of mutation is determined to exceed the predetermined lower limit value, and
setting a new calculation region by expanding the calculation region and calculating the degree of mutation are repeated until the maximum degree of mutation is determined to exceed the lower limit value.

21. The computer program according to claim 20,
wherein the executing of the predetermined alignment processing further includes setting, as the predetermined lower limit value, a value of a degree of mutation in a case where it is assumed that there are m consecutive gaps in a predetermined element array and the other portions are matched.

# FIG. 1

COMPUTER SYSTEM 1

10

HOST
COMPUTER

30

DATABASE

INTERFACE

SUBORDINATE
COMPUTER

20 (1)

SUBORDINATE
COMPUTER

20 (2)

SUBORDINATE
COMPUTER

20 (3)

• • •

SUBORDINATE
COMPUTER

20 (n)

# FIG. 2

```
        ┌─────────────────────────────────┐
        │   PROCESSING FOR APPROXIMATE    │
        │  CHARACTER STRING COMPARISON    │
        └─────────────────────────────────┘
                        │
                        ▼
  ┌───────────────────────────────────────────┐
  │  CREATION PROCESSING FOR HIERARCHICAL INDEX │ ─── S201
  │  WITH RESPECT TO REFERENCE CHARACTER STRING │
  └───────────────────────────────────────────┘
                        │
                        ▼
  ┌───────────────────────────────────────────┐
  │  SEARCH PROCESSING FOR REFERENCE CHARACTER │ ─── S202
  │   STRING BASED ON QUERY CHARACTER STRING   │
  └───────────────────────────────────────────┘
                        │
                        ▼
  ┌───────────────────────────────────────────┐
  │    CREATION OF CHARACTER STRING PAIR FOR   │ ─── S203
  │  APPROXIMATE CHARACTER STRING COMPARISON   │
  └───────────────────────────────────────────┘
                        │
                        ▼
  ┌───────────────────────────────────────────┐
  │  DERIVATION OF APPROXIMATECHARACTER STRING │ ─── S204
  └───────────────────────────────────────────┘
                        │
                        ▼
                 ┌─────────────┐
                 │     END     │
                 └─────────────┘
```

# FIG. 3

```
      ┌─────────────────────────┐
      │   CREATION PROCESSING   │
      │        FOR INDEX        │
      └─────────────────────────┘
                   │
                   ▼
┌─────────────────────────────────────────┐
│    RECEPTION OF CHARACTER SEQUENCE       │ ～ S301
└─────────────────────────────────────────┘
                   │
                   ▼
┌─────────────────────────────────────────┐
│ CUTTING OUT OF EACH KEY IN ACCORDANCE WITH│ ～ S302
│    KEY LENGTH TO CREATE KEY SEQUENCE     │
└─────────────────────────────────────────┘
                   │
                   ▼
┌─────────────────────────────────────────┐
│ CALCULATION OF HASH VALUE OF KEY AND ASSIGNING │ ～ S303
└─────────────────────────────────────────┘
                   │
                   ▼
┌─────────────────────────────────────────┐
│ SORTING IN ACCORDANCE WITH HASH VALUE OF KEY │ ～ S304
└─────────────────────────────────────────┘
                   │
                   ▼
┌─────────────────────────────────────────┐
│ IDENTIFICATION OF START POSITION OF APPEARANCE OF │ ～ S305
│ KEY AND NUMBER OF TIMES OF APPEARANCE OF KEY │
└─────────────────────────────────────────┘
                   │
                   ▼
          NUMBER OF TIMES OF APPEARANCE         S306
              >ALLOWABLE VALUE?        ─── No
                   │
                  Yes
                   ▼
┌─────────────────────────────────────────┐
│    ADDITION OF ADDITIONAL KEY TO KEY AND  │ ～ S307
│       CREATION OF EXPANDED KEY           │
└─────────────────────────────────────────┘
                   │
                   ▼
┌─────────────────────────────────────────┐
│   SORTING EXPANDED KEY IN ACCORDANCE      │ ～ S308
│         WITH ADDITIONAL KEY              │
└─────────────────────────────────────────┘

                              ┌─────────┐
                              │   END   │
                              └─────────┘
```

# FIG. 4

# FIG. 4A

CREATION OF KEY SEQUENCE

| | | |
|---|---|---|
| 0 | C | C |
| 1 | C | G |
| 2 | G | A |
| 3 | A | T |
| 4 | T | C |
| 5 | C | T |
| 6 | T | G |
| 7 | G | T |
| 8 | T | A |
| 9 | A | T |
| 10 | T | A |
| 11 | A | C |
| 12 | C | C |
| 13 | C | C |
| 14 | C | T |
| 15 | T | A |
| 16 | A | C |
| 17 | C | G |
| 18 | G | A |

(a)

ASSIGNMENT OF HASH VALUE

| | | | |
|---|---|---|---|
| 0 | 5 | C | C |
| 1 | 6 | C | G |
| 2 | 8 | G | A |
| 3 | 3 | A | T |
| 4 | 13 | T | C |
| 5 | 7 | C | T |
| 6 | 14 | T | G |
| 7 | 11 | G | T |
| 8 | 12 | T | A |
| 9 | 3 | A | T |
| 10 | 12 | T | A |
| 11 | 1 | A | C |
| 12 | 5 | C | C |
| 13 | 5 | C | C |
| 14 | 7 | C | T |
| 15 | 12 | T | A |
| 16 | 1 | A | C |
| 17 | 6 | C | G |
| 18 | 8 | G | A |

(b)

SORTING IN ACCORDANCE WITH HASH VALUE

| | | | | |
|---|---|---|---|---|
| 0 | 1 | 11 | A | C |
| 1 | 1 | 16 | A | C |
| 2 | 3 | 3 | A | T |
| 3 | 3 | 9 | A | T |
| 4 | 5 | 0 | C | C |
| 5 | 5 | 12 | C | C |
| 6 | 5 | 13 | C | C |
| 7 | 6 | 1 | C | G |
| 8 | 6 | 17 | C | G |
| 9 | 7 | 5 | C | T |
| 10 | 7 | 14 | C | T |
| 11 | 8 | 2 | G | A |
| 12 | 8 | 18 | G | A |
| 13 | 11 | 7 | G | T |
| 14 | 12 | 8 | T | A |
| 15 | 12 | 10 | T | A |
| 16 | 12 | 15 | T | A |
| 17 | 13 | 4 | T | C |
| 18 | 14 | 6 | T | G |

(c)

# FIG. 4B

ADDITION OF
ADDITIONAL KEY (FIRST TIME)

| 0 | 1 | 11 | A | C | C |
|---|---|----|---|---|---|
| 1 | 1 | 16 | A | C | G |
| 2 | 3 | 3 | A | T | C |
| 3 | 3 | 9 | A | T | A |
| 4 | 5 | 0 | C | C | G |
| 5 | 5 | 12 | C | C | C |
| 6 | 5 | 13 | C | C | T |
| 7 | 6 | 1 | C | G | A |
| 8 | 6 | 17 | C | G | A |
| 9 | 7 | 5 | C | T | G |
| 10 | 7 | 14 | C | T | A |
| 11 | 8 | 2 | G | A | T |
| 12 | 8 | 18 | G | A | $ |
| 13 | 11 | 7 | G | T | |
| 14 | 12 | 8 | T | A | T |
| 15 | 12 | 10 | T | A | C |
| 16 | 12 | 15 | T | A | C |
| 17 | 13 | 4 | T | C | |
| 18 | 14 | 6 | T | G | |

SORTING IN ACCORDANCE
WITH ADDITIONAL KEY (FIRST TIME)

| 0 | 1 | 11 | A | C | C |
|---|---|----|---|---|---|
| 1 | 1 | 16 | A | C | G |
| 2 | 3 | 9 | A | T | A |
| 3 | 3 | 3 | A | T | C |
| 4 | 5 | 12 | C | C | C |
| 5 | 5 | 0 | C | C | G |
| 6 | 5 | 13 | C | C | T |
| 7 | 6 | 1 | C | G | A |
| 8 | 6 | 17 | C | G | A |
| 9 | 7 | 14 | C | T | A |
| 10 | 7 | 5 | C | T | G |
| 11 | 8 | 2 | G | A | T |
| 12 | 8 | 18 | G | A | $ |
| 13 | 11 | 7 | G | T | |
| 14 | 12 | 10 | T | A | C |
| 15 | 12 | 15 | T | A | C |
| 16 | 12 | 8 | T | A | T |
| 17 | 13 | 4 | T | C | |
| 18 | 14 | 6 | T | G | |

(a)

(b)

# FIG. 4C

ADDITION OF
ADDITIONAL KEY (SECOND TIME)

| | | | | | | |
|---|---|---|---|---|---|---|
| 0 | 1 | 11 | A | C | C | |
| 1 | 1 | 16 | A | C | G | |
| 2 | 3 | 3 | A | T | C | |
| 3 | 3 | 9 | A | T | A | |
| 4 | 5 | 0 | C | C | G | |
| 5 | 5 | 12 | C | C | C | |
| 6 | 5 | 13 | C | C | T | |
| 7 | 6 | 1 | C | G | A | T |
| 8 | 6 | 17 | C | G | A | $ |
| 9 | 7 | 5 | C | T | G | |
| 10 | 7 | 14 | C | T | A | |
| 11 | 8 | 2 | G | A | T | |
| 12 | 8 | 18 | G | A | $ | |
| 13 | 11 | 7 | G | T | | |
| 14 | 12 | 8 | T | A | T | |
| 15 | 12 | 10 | T | A | C | C |
| 16 | 12 | 15 | T | A | C | G |
| 17 | 13 | 4 | T | C | | |
| 18 | 14 | 6 | T | G | | |

(a)

SORTING IN ACCORDANCE
WITH ADDITIONAL KEY (SECOND TIME)

| | | | | | | |
|---|---|---|---|---|---|---|
| 0 | 1 | 11 | A | C | C | |
| 1 | 1 | 16 | A | C | G | |
| 2 | 3 | 9 | A | T | A | |
| 3 | 3 | 3 | A | T | C | |
| 4 | 5 | 12 | C | C | C | |
| 5 | 5 | 0 | C | C | G | |
| 6 | 5 | 13 | C | C | T | |
| 7 | 6 | 1 | C | G | A | T |
| 8 | 6 | 17 | C | G | A | $ |
| 9 | 7 | 14 | C | T | A | |
| 10 | 7 | 5 | C | T | G | |
| 11 | 8 | 2 | G | A | T | |
| 12 | 8 | 18 | G | A | $ | |
| 13 | 11 | 7 | G | T | | |
| 14 | 12 | 10 | T | A | C | C |
| 15 | 12 | 15 | T | A | C | G |
| 16 | 12 | 8 | T | A | T | |
| 17 | 13 | 4 | T | C | | |
| 18 | 14 | 6 | T | G | | |

(b)

# FIG. 5

(a)

| | | START POSITION | NUMBER OF TIMES OF APPEARANCE |
|---|---|---|---|
| A | A | – | 0 |
| A | C | 0 | 2 |
| A | G | – | 0 |
| A | T | 2 | 2 |
| C | A | – | 0 |
| C | C | 4 | 3 |
| C | G | 7 | 2 |
| C | T | 9 | 2 |
| G | A | 11 | 2 |
| G | C | – | 0 |
| G | G | – | 0 |
| G | T | 13 | 1 |
| T | A | 14 | 3 |
| T | C | 17 | 1 |
| T | G | 18 | 1 |
| T | T | – | 0 |

(b)

| | | | START POSITION | NUMBER OF TIMES OF APPEARANCE |
|---|---|---|---|---|
| A | A | | – | 0 |
| A | C | C | 0 | 1 |
| A | C | G | 1 | 1 |
| A | G | | – | 0 |
| A | T | A | 2 | 1 |
| A | T | C | 3 | 1 |
| C | A | | – | 0 |
| C | C | C | 4 | 1 |
| C | C | G | 5 | 1 |
| C | C | T | 6 | 1 |
| C | G | A | 7 | 2 |
| C | T | A | 9 | 1 |
| C | T | G | 10 | 1 |
| G | A | T | 11 | 1 |
| G | A | $ | 12 | 1 |
| G | C | | – | 0 |
| G | G | | – | 0 |
| G | T | A | 13 | 1 |
| T | A | C | 14 | 2 |
| T | A | T | 16 | 1 |
| T | C | T | 17 | 1 |
| T | G | T | 18 | 1 |
| T | T | | – | 0 |

(c)

| | | | | START POSITION | NUMBER OF TIMES OF APPEARANCE |
|---|---|---|---|---|---|
| A | A | | | – | 0 |
| A | C | C | | 0 | 1 |
| A | C | G | | 1 | 1 |
| A | G | | | – | 0 |
| A | T | A | | 2 | 1 |
| A | T | C | | 3 | 1 |
| C | A | | | – | 0 |
| C | C | C | | 4 | 1 |
| C | C | G | | 5 | 1 |
| C | C | T | | 6 | 1 |
| C | G | A | T | 7 | 1 |
| C | G | A | $ | 8 | 1 |
| C | T | A | | 9 | 1 |
| C | T | G | | 10 | 1 |
| G | A | T | | 11 | 1 |
| G | A | $ | | 12 | 1 |
| G | C | | | – | 0 |
| G | G | | | – | 0 |
| G | T | A | | 13 | 1 |
| T | A | C | C | 14 | 1 |
| T | A | C | G | 15 | 1 |
| T | A | T | | 16 | 1 |
| T | C | T | | 17 | 1 |
| T | G | T | | 18 | 1 |
| T | T | | | – | 0 |

# FIG. 6

START POSITION

NUMBER OF TIMES OF APPEARANCE

| T | A | | 14 | | 3 |

(a)

START POSITION

NUMBER OF TIMES OF APPEARANCE

| T | A | C | 14 | 2 |
| | | T | 16 | 1 |

(b)

START POSITION

NUMBER OF TIMES OF APPEARANCE

| T | A | C | C | 14 | 1 |
| | | | G | 15 | 1 |
| | | T | | 16 | 1 |

(c)

# FIG. 7

```
                              ╭──────────────────╮
                              │      SEARCH       │
                              │    PROCESSING     │
                              ╰──────────────────╯
                                       │
                                       ▼
S701 ┌──────────────────────────────────────────────────────┐
     │           EXPANSION OF INDEX ON MEMORY                │
     └──────────────────────────────────────────────────────┘
                                       │
                                       ▼
S702 ┌──────────────────────────────────────────────────────┐
     │        RECEPTION OF QUERY CHARACTER STRING            │
     └──────────────────────────────────────────────────────┘
                                       │
                                       ▼
S703 ┌──────────────────────────────────────────────────────┐
     │       CUTTING OUT OF EACH KEY IN ACCORDANCE           │
     │                  WITH KEY LENGTH                      │
     └──────────────────────────────────────────────────────┘
                                       │
                                       ▼
S704 ┌──────────────────────────────────────────────────────┐
     │          CALCULATION OF HASH VALUE OF KEY             │
     └──────────────────────────────────────────────────────┘
                                       │
                                       ▼
S705 ┌──────────────────────────────────────────────────────┐
     │        REFERRING TO INDEX IN ACCORDANCE              │
     │                 WITH HASH VALUE                      │
     └──────────────────────────────────────────────────────┘
                                       │
                                       ▼
S706 ┌──────────────────────────────────────────────────────┐
     │     IDENTIFICATION OF START POSITION OF              │
     │    APPEARANCE OF KEY AND NUMBER OF                   │
     │      TIMES OF APPEARANCE OF KEY                      │
     └──────────────────────────────────────────────────────┘
```

S707 NUMBER OF TIMES OF APPEARANCE > ALLOWABLE VALUE?

Yes / No

S708 KEY LENGTH > UPPER LIMIT VALUE?

Yes / No

S710 EXTENSION OF SAMPLING INTERVAL OF KEY

S711 OUTPUT OF IDENTIFIED KEY AND START POSITION OF APPEARANCE THEREOF

S709 ADDITION OF ADDITIONAL KEY TO KEY AND CREATION OF EXPANDED KEY

END

# FIG. 8A

REFERENCE CHARACTER STRING
(CHARACTER STRING TO BE SUBJECTED TO COMPARISON)

| | i | 0 | 1 | 2 | 3 | 4 | 5 | 6 | 7 | 8 |
|---|---|---|---|---|---|---|---|---|---|---|
| j | | φ | G | C | C | T | C | G | C | T |
| 0 | φ | 0 | | | | | | | | |
| 1 | G | | | | | | | | | |
| 2 | C | | | | | | | | | |
| 3 | C | | | | | | | | | |
| 4 | A | | | | | | | | | |
| 5 | T | | | | | | | | | |
| 6 | T | | | | | | | | | |
| 7 | C | | | | | | | | | |
| 8 | A | | | | | | | | | |

QUERY CHARACTER STRING
(CHARACTER STRING FOR COMPARISON)

# FIG. 8B

REFERENCE CHARACTER STRING
(CHARACTER STRING TO BE SUBJECTED TO COMPARISON)

| | i | 0 | 1 | 2 | 3 | 4 | 5 | 6 | 7 | 8 |
|---|---|---|---|---|---|---|---|---|---|---|
| j | | $\phi$ | G | C | C | T | C | G | C | T |
| 0 | $\phi$ | 0 | −2 | −4 | −6 | −8 | −10 | −12 | −14 | −16 |
| 1 | G | −2 | | | | | | | | |
| 2 | C | −4 | | | | | | | | |
| 3 | C | −6 | | | | | | | | |
| 4 | A | −8 | | | | | | | | |
| 5 | T | −10 | | | | | | | | |
| 6 | T | −12 | | | | | | | | |
| 7 | C | −14 | | | | | | | | |
| 8 | A | −16 | | | | | | | | |

QUERY CHARACTER STRING
(CHARACTER STRING FOR COMPARISON)

# FIG. 8C

REFERENCE CHARACTER STRING
(CHARACTER STRING TO BE SUBJECTED TO COMPARISON)

| | i | 0 | 1 | 2 | 3 | 4 | 5 | 6 | 7 | 8 |
|---|---|---|---|---|---|---|---|---|---|---|
| j | | $\phi$ | G | C | C | T | C | G | C | T |
| 0 | $\phi$ | 0 | -2 | -4 | -6 | -8 | -10 | -12 | -14 | -16 |
| 1 | G | -2 | 2 | | | | | | | |
| 2 | C | -4 | | | | | | | | |
| 3 | C | -6 | | | | | | | | |
| 4 | A | -8 | | | | | | | | |
| 5 | T | -10 | | | | | | | | |
| 6 | T | -12 | | | | | | | | |
| 7 | C | -14 | | | | | | | | |
| 8 | A | -16 | | | | | | | | |

QUERY CHARACTER STRING
(CHARACTER STRING FOR COMPARISON)

# FIG. 8D

REFERENCE CHARACTER STRING
(CHARACTER STRING TO BE SUBJECTED TO COMPARISON)

| | i | 0 | 1 | 2 | 3 | 4 | 5 | 6 | 7 | 8 |
|---|---|---|---|---|---|---|---|---|---|---|
| j | | $\phi$ | G | C | C | T | C | G | C | T |
| 0 | $\phi$ | 0 | -2 | -4 | -6 | -8 | -10 | -12 | -14 | -16 |
| 1 | G | -2 | 2 | 0 | -2 | -4 | -6 | -8 | -10 | -12 |
| 2 | C | -4 | 0 | 4 | 2 | 0 | -2 | -4 | -6 | -8 |
| 3 | C | -6 | -2 | 2 | 6 | 4 | 2 | 0 | -2 | -4 |
| 4 | A | -8 | -4 | 0 | 4 | 5 | 3 | 1 | -1 | -3 |
| 5 | T | -10 | -6 | -2 | 2 | 6 | 4 | 2 | 0 | 1 |
| 6 | T | -12 | -8 | -4 | 0 | 4 | 5 | 3 | 1 | 2 |
| 7 | C | -14 | -10 | -6 | -2 | 2 | 3 | 7 | 5 | 3 |
| 8 | A | -16 | -12 | -8 | -4 | 0 | 1 | 5 | 6 | 4 |

QUERY CHARACTER STRING
(CHARACTER STRING FOR COMPARISON)

# FIG. 9

```
         ALIGNMENT
         PROCESSING
             │
             ▼
┌──────────────────────────────────────┐
│   CREATION OF ALIGNMENT TABLE         │ ∿ S1001
│   BASED ON CHARACTER STRING PAIR      │
└──────────────────────────────────────┘
             │
             ▼
┌──────────────────────────────────────┐
│ SETTING OF WIDTH m IN CALCULATION     │ ∿ S1002
│ REGION TO INITIAL VALUE               │
└──────────────────────────────────────┘
             │
             ▼
┌──────────────────────────────────────┐
│ SETTING OF DUMMY VALUE FOR EACH       │ ∿ S1003
│ ELEMENT AT BOUNDARY OF CALCULATION    │
│ REGION                                │
└──────────────────────────────────────┘
             │
             ▼
┌──────────────────────────────────────┐
│ CALCULATION OF DEGREE OF MUTATION OF  │ ∿ S1004
│ EACH ELEMENT IN CALCULATION REGION    │
└──────────────────────────────────────┘
             │
             ▼
┌──────────────────────────────────────┐
│ DETERMINATION OF MAXIMUM DEGREE OF    │ ∿ S1005
│ MUTATION                              │
└──────────────────────────────────────┘
             │
             ▼
┌──────────────────────────────────────┐
│ CALCULATION OF LOWER LIMIT VALUE OF   │ ∿ S1006
│ DEGREE OF MUTATION                    │
└──────────────────────────────────────┘
             │
             ▼                              S1007
      ╱────────────────╲
No  ╱   MAXIMUM VALUE    ╲
◄──┤  > LOWER LIMIT VALUE? │
     ╲                    ╱
      ╲──────────────────╱
│                    │ Yes
▼                    │
┌─────────────┐      │
│  m = m + δ  │ ∿ S1008
└─────────────┘      │
                     ▼
┌──────────────────────────────────────┐
│ DERIVATION OF APPROXIMATE CHARACTER   │ ∿ S1009
│ STRING BY BACKTRACKING                │
└──────────────────────────────────────┘
             │
             ▼
┌──────────────────────────────────────┐
│ OUTPUT OF APPROXIMATE CHARACTER STRING│ ∿ S1010
└──────────────────────────────────────┘
             │
             ▼
           END
```

# FIG. 10A

REFERENCE CHARACTER STRING (CHARACTER STRING TO BE SUBJECTED TO COMPARISON)

QUERY CHARACTER STRING (CHARACTER STRING FOR COMPARISON)

CALCULATION REGION R(1)

# FIG. 10B

REFERENCE CHARACTER STRING (CHARACTER STRING TO BE SUBJECTED TO COMPARISON)

QUERY CHARACTER STRING (CHARACTER STRING FOR COMPARISON)

| | i | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|---|---|
| j | | φ | G | G | G | A | T | C | C | G | A | T | A | A | T | C | G | T | C | C | C | C | T | A | G | G |
| 0 | φ | 0 | -2 | -4 | -6 | -20 | | | | | | | | | | | | | | | | | | | | |
| 1 | G | -2 | 2 | 0 | -2 | -4 | -20 | | | | | | | | | | | | | | | | | | | |
| 2 | G | -4 | 0 | 4 | 2 | 0 | -2 | -20 | | | | | | | | | | | | | | | | | | |
| 3 | G | -6 | -2 | 2 | 6 | 4 | 2 | 0 | -20 | | | | | | | | | | | | | | | | | |
| 4 | C | | -4 | 0 | 4 | 5 | 3 | 4 | 2 | -20 | | | | | | | | | | | | | | | | |
| 5 | A | | | -2 | 2 | 6 | 4 | 2 | 3 | 1 | -20 | | | | | | | | | | | | | | | |
| 6 | T | | | | 0 | 4 | 8 | 6 | 4 | 2 | 0 | -20 | | | | | | | | | | | | | | |
| 7 | T | | | | | 2 | 6 | 7 | 5 | 3 | 1 | -1 | -20 | | | | | | | | | | | | | |
| 8 | C | | | | | 4 | 8 | 9 | 7 | 5 | 3 | 1 | -20 | | | | | | | | | | | | | |
| 9 | A | | | | | | 6 | 7 | 8 | 9 | 7 | 5 | 3 | -20 | | | | | | | | | | | | |
| 10 | A | | | | | | 5 | 6 | 10 | 8 | 9 | 7 | 5 | -20 | | | | | | | | | | | | |
| 11 | C | | | | | | | 4 | 8 | 9 | 7 | 8 | 3 | 7 | -20 | | | | | | | | | | | |
| 12 | A | | | | | | | 6 | 7 | 11 | 9 | 7 | 5 | 6 | -20 | | | | | | | | | | | |
| 13 | T | | | | | | | | 8 | 9 | 10 | 11 | 9 | 7 | 8 | -20 | | | | | | | | | | |
| 14 | A | | | | | | | | 10 | 11 | 9 | 10 | 8 | 6 | 7 | -20 | | | | | | | | | | |
| 15 | A | | | | | | | | 12 | 10 | 8 | 9 | 7 | 5 | 6 | -20 | | | | | | | | | | |
| 16 | G | | | | | | | | | 11 | 9 | 10 | 8 | 6 | 4 | 5 | -20 | | | | | | | | | |
| 17 | T | | | | | | | | | 10 | 8 | 12 | 10 | 8 | 6 | 4 | -20 | | | | | | | | | |
| 18 | C | | | | | | | | | 12 | 10 | 14 | 12 | 10 | 8 | 6 | -20 | | | | | | | | | |
| 19 | G | | | | | | | | | | 14 | 12 | 13 | 11 | 9 | 7 | 5 | -20 | | | | | | | | |
| 20 | G | | | | | | | | | | | 13 | 11 | 12 | 10 | 8 | 6 | 7 | -20 | | | | | | | |
| 21 | C | | | | | | | | | | | | 15 | 13 | 14 | 12 | 10 | 8 | 6 | | | | | | | |
| 22 | C | | | | | | | | | | | | | 17 | 15 | 13 | 11 | 9 | 7 | | | | | | | |
| 23 | T | | | | | | | | | | | | | | 16 | 17 | 15 | 13 | 11 | | | | | | | |
| 24 | G | | | | | | | | | | | | | | | 15 | 16 | 17 | 15 | | | | | | | |

CALCULATION REGION R(0)

F_max

# FIG. 10C

REFERENCE CHARACTER STRING (CHARACTER STRING TO BE SUBJECTED TO COMPARISON)

QUERY CHARACTER STRING (CHARACTER STRING FOR COMPARISON)

| i | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|---|
| j | φ | G | G | G | A | T | C | C | G | A | T | A | A | T | C | G | T | C | C | C | C | T | A | G | G |
| 0 φ | 0 | -2 | -4 | -6 | -8 | -10 | -12 | -14 | -20 | | | | | | | | | | | | | | | | |
| 1 G | -2 | 2 | 0 | -2 | -4 | -6 | -8 | -10 | -12 | -20 | | | | | | | | | | | | | | | |
| 2 G | -4 | 0 | 4 | 2 | 0 | -2 | -4 | -6 | -8 | -10 | -20 | | | | | | | | | | | | | | |
| 3 G | -6 | -2 | 2 | 6 | 4 | 2 | 0 | -2 | -4 | -6 | -8 | -20 | | | | | | | | | | | | | |
| 4 C | -8 | -4 | 0 | 4 | 5 | 3 | 4 | 2 | 0 | -2 | -4 | -6 | -20 | | | | | | | | | | | | |
| 5 A | -10 | -6 | -2 | 2 | 6 | 4 | 2 | 3 | 1 | 2 | 0 | -2 | -4 | -20 | | | | | | | | | | | |
| 6 T | -12 | -8 | -4 | 0 | 4 | 8 | 6 | 4 | 2 | 0 | 4 | 2 | 0 | -2 | -20 | | | | | | | | | | |
| 7 T | -14 | -10 | -6 | -2 | 2 | 6 | 7 | 5 | 3 | 1 | -1 | 3 | 1 | 2 | 0 | -20 | | | | | | | | | |
| 8 C | | -12 | -8 | -4 | 0 | 4 | 8 | 9 | 7 | 5 | 3 | 1 | 2 | 0 | 4 | 2 | -20 | | | | | | | | |
| 9 A | | | -10 | -6 | -2 | 2 | 6 | 7 | 8 | 9 | 7 | 5 | 3 | 1 | 2 | 3 | 1 | -20 | | | | | | | |
| 10 A | | | | -8 | -4 | 0 | 4 | 5 | 6 | 10 | 8 | 9 | 7 | 5 | 3 | 1 | 2 | 0 | -20 | | | | | | |
| 11 C | | | | -6 | -2 | 2 | 6 | 4 | 8 | 9 | 7 | 8 | 3 | 7 | 5 | 3 | 4 | 2 | -20 | | | | | | |
| 12 A | | | | | -4 | 0 | 4 | 5 | 6 | 7 | 11 | 9 | 7 | 5 | 6 | 4 | 2 | 3 | 1 | -20 | | | | | |
| 13 T | | | | | | -2 | 2 | 3 | 4 | 8 | 9 | 10 | 11 | 9 | 7 | 8 | 6 | 4 | 2 | 0 | -20 | | | | |
| 14 A | | | | | | | 0 | 1 | 5 | 6 | 10 | 11 | 9 | 10 | 8 | 6 | 7 | 5 | 3 | 1 | -1 | -20 | | | |
| 15 A | | | | | | | | -1 | 3 | 4 | 8 | 12 | 10 | 8 | 9 | 7 | 5 | 6 | 4 | 2 | 0 | 1 | -20 | | |
| 16 G | | | | | | | | | 1 | 2 | 6 | 10 | 11 | 9 | 10 | 8 | 6 | 4 | 5 | 3 | 1 | -1 | 3 | -20 | |
| 17 T | | | | | | | | | | 3 | 4 | 8 | 12 | 10 | 8 | 12 | 10 | 8 | 6 | 4 | 5 | 3 | 1 | 2 | |
| 18 C | | | | | | | | | | | 2 | 6 | 10 | 14 | 12 | 10 | 14 | 12 | 10 | 8 | 6 | 4 | 2 | 0 | |
| 19 G | | | | | | | | | | | | 4 | 8 | 12 | 16 | 14 | 12 | 13 | 11 | 9 | 7 | 5 | 6 | 4 | |
| 20 G | | | | | | | | | | | | | 6 | 10 | 14 | 15 | 13 | 11 | 12 | 10 | 8 | 6 | 7 | 8 | |
| 21 C | | | | | | | | | | | | | | 8 | 12 | 13 | 17 | 15 | 13 | 14 | 12 | 10 | 8 | 6 | |
| 22 C | | | | | | | | | | | | | | | 10 | 11 | 15 | 19 | 17 | 15 | 13 | 11 | 9 | 7 | |
| 23 T | | | | | | | | | | | | | | | | 12 | 13 | 17 | 18 | 16 | 17 | 15 | 13 | 11 | |
| 24 G | | | | | | | | | | | | | | | | | 11 | 15 | 16 | 17 | 15 | 16 | 17 | 15 | |

CALCULATION REGION R(1)

$F_{max}$

# FIG. 11A

# FIG. 11B

(d)

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| REFERENCE CHARACTER STRING | G | G | G | A | T | C | C | G | A | T | A | A | T | C | G | T | C | C |
| APPROXIMATE CHARACTER STRING | G | G | <C> | A | T | [T] | C | [A] <A> <C> | A | T | A | A <G> | T | C | G | [G] | C | C |

(e)

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| REFERENCE CHARACTER STRING | G | G | G | A | T | C | C | G | A | T | A | A | T | C | G | T | C | C |
| APPROXIMATE CHARACTER STRING | G | G | <C> | A | <T> | T | C | [A] [A] | – | A | T | A A <G> | T | C | G | [G] | C | C |

(f)

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| REFERENCE CHARACTER STRING | G | G | G | A | T | C | C | G | A | T | A | A | T | C | G | T | C | C |
| APPROXIMATE CHARACTER STRING | G | G | <C> | A | T | <T> | C | <A> [A] [C] | A | T | A | A <G> | T | C | G | [G] | C | C |

FIG. 12

## INTERNATIONAL SEARCH REPORT

| International application No. |
| --- |
| **PCT/JP2023/008899** |

| A. | CLASSIFICATION OF SUBJECT MATTER |
| --- | --- |

*G06F 16/31*(2019.01)i
FI: G06F16/31

According to International Patent Classification (IPC) or to both national classification and IPC

| B. | FIELDS SEARCHED |
| --- | --- |

Minimum documentation searched (classification system followed by classification symbols)

G06F16/00-16/958

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2021/0201163 A1 (INTEL CORPORATION) 01 July 2021 (2021-07-01) paragraphs [0026]-[0028] | 1-21 |
| A | US 2012/0239706 A1 (STEINFADT, Shannon I.) 20 September 2012 (2012-09-20) abstract, paragraphs [0003], [0125], fig. 1-2 | 1-21 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 May 2023** | **30 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/008899** |

| Patent document cited in search report | Publication date (day/month/year) | Patent family member(s) | Publication date (day/month/year) |
| --- | --- | --- | --- |
| US 2021/0201163 A1 | 01 July 2021 | (Family: none) | |
| US 2012/0239706 A1 | 20 September 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HENG LI**. Aligning sequence reads, clone sequences and assembly contigs with BWA-MEM. *arXiv: 1303.3997 (q-bio.GN)*, 26 May 2013

- **MASAO UCHIYAMA et al.** Fast Scanning Method of Suffix Array for Full Text Retrieving by Approximate Character String Comparison. *Information Processing Society of Japan*, 15 September 2002, vol. 43